# EUROPEAN PATENT SPECIFICATION

(11) **EP 4 409 863 B1**
(45) Date of publication and mention of the grant of the patent: **20.05.2026**
(21) Application number: 21786425.5
(22) Date of filing: 30.09.2021
(51) Int. Cl.: H04L 65/10, H04L 65/80

(54) **HANDLING SUBSCRIPTIONS TO NOTIFICATIONS OF DATA CHANGES RELATED TO A NETWORK FUNCTION SERVICE**
HANDHABUNG VON ABONNEMENTS FÜR BENACHRICHTIGUNGEN VON DATENÄNDERUNGEN IM ZUSAMMENHANG MIT EINEM NETZWERKFUNKTIONSDIENST
GESTION D'ABONNEMENTS À DES NOTIFICATIONS DE CHANGEMENTS DE DONNÉES LIÉS À UN SERVICE DE FONCTION DE RÉSEAU

(43) Date of publication of application: 07.08.2024
(73) Proprietor: Nokia Technologies Oy, 02610 Espoo (FI)
(72) Inventor: PAPAGEORGIOU, Apostolos, 81541 Munich (DE); KHARE, Saurabh, Bangalore 560005 (IN); GKATZIKIS, Lazaros, 92130 Issy-les-Moulineuaux (FR)
(74) Representative: Nokia EPO representatives
(86) International application number: PCT/EP2021/076966
(87) International publication number: WO 2023/051918

(56) References cited:
- WO-A1-2021/063657
- "3rd Generation Partnership Project; Technical Specification Group Services and System Aspects; Architecture enhancements for 5G System (5GS) to support network data analytics services (Release 17)", no. V17.2.0, 24 September 2021 (2021-09-24), pages 1 - 196, XP052056721, Retrieved from the Internet <URL:https://ftp.3gpp.org/Specs/archive/23_series/23.288/23288-h20.zip 23288-h20.docx> [retrieved on 20210924]

## Description

### Field

The present disclosure relates to apparatuses and methods to handle subscriptions to notifications of data changes related to a network function service.

### Background

A communication system can be seen as a facility that enables communication sessions between two or more entities such as user terminals, access nodes and/or other nodes by providing resources for communications between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data and so on. Content may be multicast or uni-cast to communication devices.

A user can access the communication system by means of an appropriate communication device or terminal. A communication device of a user is often referred to as user equipment (UE) or user device. The communication device may access a carrier provided by an access node and transmit and/or receive communications on the carrier.

The communication system and associated devices typically operate in accordance with a required standard or specification which sets out what the various entities associated with the system are permitted to do and how that should be achieved. Communication protocols and/or parameters which shall be used for the connection are also typically defined. One example of a communications system is UTRAN (3G radio). Another example of an architecture that is known is the long-term evolution (LTE) or the Universal Mobile Telecommunications System (UMTS) radio-access technology. Another example communication system is so called 5G system that allows user equipment (UE) or user device to contact a 5G core via e.g. new radio (NR) access technology or via other access technology such as Untrusted access to 5GC or wireline access technology. Access to a 5G core may also be provided via an alternative network such as, for example, UTRAN or UMTS.

The prior art WO2021/063657 A1 shows how to deal with indirect communications, wherein an SCP is employed by the NF service consumer, so that the SCP routes messages between NF service consumers and NF service producers and also performs discovery functionality.

### Summary

The present invention is defined by the subject-matter of the independent claims. Further detailed embodiments are defined in the dependent claims.

According to a first aspect, there is provided an apparatus for a network function service producer, the apparatus comprising means for: determining whether a direct or an indirect subscription mechanism is optimal for the network function service producer: and signalling an indication of the determined optimal subscription mechanism to a network function.

The network function may be a network repository function.

The network function may be a network function service consumer, and the apparatus comprises: means for receiving from the network function, a subscription request for subscribing to receive information about at least one event at the network function service producer, wherein the receiving is performed prior to said signalling an indication of the determined optimal subscription mechanism.

The determined optimal subscription mechanism may be an indirect subscription mechanism, and the means for signalling the indication of the determined optimal subscription mechanism comprises signalling a rejection of the subscription request.

The rejection may comprise an explicit indication that an indirect subscription mechanism is an optimal subscription mechanism for the network function service producer when the subscription request received at the network function service producer is received via a direct subscription request.

The apparatus may comprise means for: exchanging signalling with a network analytics function at a first time to determine whether the direct or indirect subscription mechanism is optimal for the network function service producer; exchanging signalling with the network analytics function at a second time to determine whether a direct or an indirect subscription mechanism is optimal for the network function service producer, wherein the second time is later than the first time; and when the determination at the second time results in a different optimal subscription mechanism to the optimal subscription mechanism determined at the first time, signalling the different optimal subscription mechanism to the network function.

According to a second aspect, there is provided an apparatus for a network function service consumer, the apparatus comprising means for: receiving, from a network function, an indication of whether a direct or an indirect subscription mechanism is optimal for requesting a subscription to events at a network function service producer; and signalling a subscription request in accordance with the received indication to use the signalled optimal subscription mechanism.

The network function may be a network analytics function, and the apparatus may comprise means for: signalling the network function for determining the optimal subscription mechanism, wherein the means signalling the network function comprises means for signalling an identification of a service to be subscribed to and/or an identification of the network function service producer.

The means for signalling the network function may comprise means for signalling a preference of the network function service consumer for using a direct and/or an indirect subscription.

The network function may be a network repository function.

The network function may be the network function service producer, and the apparatus may comprise means for: signalling the network function a subscription request before receiving, from the network function, the indication of whether a direct or an indirect subscription mechanism is optimal for requesting a subscription to events at a network function service producer.

The indication may indicate that an indirect subscription mechanism is preferred, and the means for signalling a subscription request in accordance with the received indication may comprise means for signalling a subscription request for the network function service producer to a proxy network function.

The indication may indicate that a direct subscription mechanism is preferred, and the means for signalling a subscription request in accordance with the received indication may comprise means for signalling a subscription request for the network function service producer to the network function service producer.

According to a third aspect, there is provided an apparatus for a network analytics function, the apparatus comprising means for: receiving, from a network function, a request to determine whether a direct or an indirect subscription mechanism is optimal for requesting a subscription to events at a network function service producer; exchanging signalling with the network function service producer to determine whether a direct or an indirect subscription mechanism is optimal for requesting a subscription to events at the network function service producer; and signalling an indication of the determined optimal subscription mechanism to a network function.

The network function may be the network function service producer.

The network function may be a network function service consumer, and the apparatus may comprise means for receiving, from the network function, an identification of a service to be subscribed to and/or an identification of the network function service producer.

The means for receiving may comprise means for receiving, from the network function, a preference of the network function service consumer for using a direct and/or an indirect subscription.

The means for signalling an indication of the determined optimal subscription mechanism to a network function may comprise means for signalling an indication of at least one network function to which a subscription request for the network function service producer is to be addressed.

The means for exchanging signalling may comprise means for receiving, from the network function service producer, an indication of a status information of a parameter of the network function service producer, wherein the apparatus comprises means for using the indication of the current and/or projected load to determine whether the direct or indirect mechanism is preferred.

According to a fourth aspect, there is provided an apparatus for a network repository function, the apparatus comprising means for: receiving, from a network function service producer, an indication of whether a direct or an indirect subscription mechanism is optimal for requesting a subscription to events at the network function service producer; storing the received indication; and providing the received indication to a network function service consumer.

The apparatus may comprise means for: receiving, from a network function service producer, a modified indication of whether a direct or an indirect subscription mechanism is optimal for requesting a subscription to events at the network function service producer, wherein the modified indication indicates the opposite subscription mechanism type to the type indicated by the received subscription mechanism; replacing the received indication with the modified indication; and providing the modified indication to a network function service consumer in response to receipt of a request for information about the network function service producer from the network function service consumer.

According to a fifth aspect, there is provided an apparatus for a network function service consumer, the apparatus comprising means for: signalling, to a network function, an indication that the apparatus is capable of requesting a subscription from a network function service producer using both a direct signalling mechanism and an indirect signalling mechanism; and receiving, from the network function, an indication of whether the apparatus should use the direct mechanism or the indirect mechanism for subscribing to the network function service producer.

The apparatus may comprise means for signalling a subscription request to the service producer using the indicated mechanism.

The network function may be the network function service producer, and said indication that the apparatus is capable of requesting a subscription from a network function service producer using both a direct signalling mechanism and an indirect signalling mechanism may comprise an explicit indication that the apparatus is capable of requesting a subscription from a network function service producer using both a direct signalling mechanism and an indirect signalling mechanism.

The network function may be a network analytics function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

The network function may be a network repository function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

According to a sixth aspect, there is provided an apparatus for a network function, the apparatus comprising means for: receiving from a network function service consumer, an indication that the apparatus is capable of requesting a subscription from a network function service producer using both a direct signalling mechanism and an indirect signalling mechanism; and signalling, to the network function service consumer, an indication of whether the apparatus should use the direct mechanism or the indirect mechanism for subscribing to the network function service producer.

The network function may be the network function service producer, and said indication that the apparatus is capable of requesting a subscription from a network function service producer using both a direct signalling mechanism and an indirect signalling mechanism may comprise an explicit indication that the apparatus is capable of requesting a subscription from a network function service producer using both a direct signalling mechanism and an indirect signalling mechanism.

The network function may be a network analytics function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

The network function may be a network repository function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

According to a seventh aspect, there is provided an apparatus for a network function service producer, the apparatus comprising: at least one processor; and at least one memory comprising code that, when executed by the at least one processor, causes the apparatus to: determine whether a direct or an indirect subscription mechanism is optimal for the network function service producer: and signal an indication of the determined optimal subscription mechanism to a network function.

The network function may be a network repository function.

The network function may be a network function service consumer, and the apparatus may be caused to: receive from the network function, a subscription request for subscribing to receive information about at least one event at the network function service producer, wherein the receiving is performed prior to said signalling an indication of the determined optimal subscription mechanism.

**The** determined optimal subscription mechanism may be an indirect subscription mechanism, and the signalling the indication of the determined optimal subscription mechanism may comprise signalling a rejection of the subscription request.

The rejection may comprise an explicit indication that an indirect subscription mechanism is an optimal subscription mechanism for the network function service producer when the subscription request received at the network function service producer is received via a direct subscription request.

The apparatus may be caused to: exchange signalling with a network analytics function at a first time to determine whether the direct or indirect subscription mechanism is optimal for the network function service producer; exchange signalling with the network analytics function at a second time to determine whether a direct or an indirect subscription mechanism is optimal for the network function service producer, wherein the second time is later than the first time; and when the determination at the second time results in a different optimal subscription mechanism to the optimal subscription mechanism determined at the first time, signal the different optimal subscription mechanism to the network function.

According to an eighth aspect, there is provided an apparatus for a network function service consumer, the apparatus comprising: at least one processor; and at least one memory comprising code that, when executed by the at least one processor, causes the apparatus to: receive, from a network function, an indication of whether a direct or an indirect subscription mechanism is optimal for requesting a subscription to events at a network function service producer; and signal a subscription request in accordance with the received indication to use the signalled optimal subscription mechanism.

The network function may be a network analytics function, and the apparatus may be caused to: signal the network function for determining the optimal subscription mechanism, wherein the signalling the network function comprises signalling an identification of a service to be subscribed to and/or an identification of the network function service producer.

The signalling the network function may comprise signalling a preference of the network function service consumer for using a direct and/or an indirect subscription.

The network function may be a network repository function.

The network function may be the network function service producer, and the apparatus may be caused to: signal the network function a subscription request before receiving, from the network function, the indication of whether a direct or an indirect subscription mechanism is optimal for requesting a subscription to events at a network function service producer.

The indication may indicate that an indirect subscription mechanism is preferred, and the signalling a subscription request in accordance with the received indication may comprise signalling a subscription request for the network function service producer to a proxy network function.

The indication may indicate that a direct subscription mechanism is preferred, and the signalling a subscription request in accordance with the received indication may comprise signalling a subscription request for the network function service producer to the network function service producer.

According to a ninth aspect, there is provided an apparatus for a network analytics function, the apparatus comprising: at least one processor; and at least one memory comprising code that, when executed by the at least one processor, causes the apparatus to: receive, from a network function, a request to determine whether a direct or an indirect subscription mechanism is optimal for requesting a subscription to events at a network function service producer; exchange signalling with the network function service producer to determine whether a direct or an indirect subscription mechanism is optimal for requesting a subscription to events at the network function service producer; and signal an indication of the determined optimal subscription mechanism to a network function.

The network function may be the network function service producer.

The network function may be a network function service consumer, and the apparatus may be caused to receivr, from the network function, an identification of a service to be subscribed to and/or an identification of the network function service producer.

The receiving may comprise receiving, from the network function, a preference of the network function service consumer for using a direct and/or an indirect subscription.

The signalling an indication of the determined optimal subscription mechanism to a network function may comprise signalling an indication of at least one network function to which a subscription request for the network function service producer is to be addressed.

The exchanging signalling may comprise receiving, from the network function service producer, an indication of a status information of a parameter of the network function service producer, wherein the apparatus is caused to use the indication of the current and/or projected load to determine whether the direct or indirect mechanism is preferred.

According to a tenth aspect, there is provided an apparatus for a network repository function, the apparatus comprising: at least one processor; and at least one memory comprising code that, when executed by the at least one processor, causes the apparatus to: receive, from a network function service producer, an indication of whether a direct or an indirect subscription mechanism is optimal for requesting a subscription to events at the network function service producer; store the received indication; and provide the received indication to a network function service consumer.

The apparatus may be caused to: receive, from a network function service producer, a modified indication of whether a direct or an indirect subscription mechanism is optimal for requesting a subscription to events at the network function service producer, wherein the modified indication indicates the opposite subscription mechanism type to the type indicated by the received subscription mechanism; replacing the received indication with the modified indication; and provide the modified indication to a network function service consumer in response to receipt of a request for information about the network function service producer from the network function service consumer.

According to an eleventh aspect, there is provided an apparatus for a network function service consumer, the apparatus comprising: at least one processor; and at least one memory comprising code that, when executed by the at least one processor, causes the apparatus to: signal, to a network function, an indication that the apparatus is capable of requesting a subscription from a network function service producer using both a direct signalling mechanism and an indirect signalling mechanism; and receive, from the network function, an indication of whether the apparatus should use the direct mechanism or the indirect mechanism for subscribing to the network function service producer.

The apparatus may be caused to signal a subscription request to the service producer using the indicated mechanism.

The network function may be the network function service producer, and said indication that the apparatus is capable of requesting a subscription from a network function service producer using both a direct signalling mechanism and an indirect signalling mechanism may comprise an explicit indication that the apparatus is capable of requesting a subscription from a network function service producer using both a direct signalling mechanism and an indirect signalling mechanism.

The network function may be a network analytics function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

The network function may be a network repository function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

According to a twelfth aspect, there is provided an apparatus for a network function, the apparatus comprising: at least one processor; and at least one memory comprising code that, when executed by the at least one processor, causes the apparatus to: receive from a network function service consumer, an indication that the apparatus is capable of requesting a subscription from a network function service producer using both a direct signalling mechanism and an indirect signalling mechanism; and signal, to the network function service consumer, an indication of whether the apparatus should use the direct mechanism or the indirect mechanism for subscribing to the network function service producer.

The network function may be the network function service producer, and said indication that the apparatus is capable of requesting a subscription from a network function service producer using both a direct signalling mechanism and an indirect signalling mechanism may comprise an explicit indication that the apparatus is capable of requesting a subscription from a network function service producer using both a direct signalling mechanism and an indirect signalling mechanism.

The network function may be a network analytics function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

The network function may be a network repository function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

According to a thirteenth aspect, there is provided a method for an apparatus for a network function service producer, the method comprising: determining whether a direct or an indirect subscription mechanism is optimal for the network function service producer: and signalling an indication of the determined optimal subscription mechanism to a network function.

The network function may be a network repository function.

The network function may be a network function service consumer, and the method may comprise: receiving from the network function, a subscription request for subscribing to receive information about at least one event at the network function service producer, wherein the receiving is performed prior to said signalling an indication of the determined optimal subscription mechanism.

The determined optimal subscription mechanism may be an indirect subscription mechanism, and the signalling the indication of the determined optimal subscription mechanism comprises signalling a rejection of the subscription request.

The rejection may comprise an explicit indication that an indirect subscription mechanism is an optimal subscription mechanism for the network function service producer when the subscription request received at the network function service producer is received via a direct subscription request.

The method may comprise: exchanging signalling with a network analytics function at a first time to determine whether the direct or indirect subscription mechanism is optimal for the network function service producer; exchanging signalling with the network analytics function at a second time to determine whether a direct or an indirect subscription mechanism is optimal for the network function service producer, wherein the second time is later than the first time; and when the determination at the second time results in a different optimal subscription mechanism to the optimal subscription mechanism determined at the first time, signalling the different optimal subscription mechanism to the network function.

According to a fourteenth aspect, there is provided a method an apparatus for a network function service consumer, the method comprising: receiving, from a network function, an indication of whether a direct or an indirect subscription mechanism is optimal for requesting a subscription to events at a network function service producer; and signalling a subscription request in accordance with the received indication to use the signalled optimal subscription mechanism.

The network function may be a network analytics function, and the method may comprise: signalling the network function for determining the optimal subscription mechanism, wherein the signalling the network function comprises signalling an identification of a service to be subscribed to and/or an identification of the network function service producer.

The signalling the network function may comprise signalling a preference of the network function service consumer for using a direct and/or an indirect subscription.

The network function may be a network repository function.

The network function may be the network function service producer, and the method may comprise: signalling the network function a subscription request before receiving, from the network function, the indication of whether a direct or an indirect subscription mechanism is optimal for requesting a subscription to events at a network function service producer.

The indication may indicate that an indirect subscription mechanism is preferred, and the signalling a subscription request in accordance with the received indication may comprise signalling a subscription request for the network function service producer to a proxy network function.

The indication may indicate that a direct subscription mechanism is preferred, and the signalling a subscription request in accordance with the received indication may comprise signalling a subscription request for the network function service producer to the network function service producer.

According to a fifteenth aspect, there is provided a method for an apparatus for a network analytics function, the method comprising: receiving, from a network function, a request to determine whether a direct or an indirect subscription mechanism is optimal for requesting a subscription to events at a network function service producer; exchanging signalling with the network function service producer to determine whether a direct or an indirect subscription mechanism is optimal for requesting a subscription to events at the network function service producer; and signalling an indication of the determined optimal subscription mechanism to a network function.

The network function may be the network function service producer.

The network function may be a network function service consumer, and the method may comprise receiving, from the network function, an identification of a service to be subscribed to and/or an identification of the network function service producer.

The receiving may comprise receiving, from the network function, a preference of the network function service consumer for using a direct and/or an indirect subscription.

The signalling an indication of the determined optimal subscription mechanism to a network function may comprise signalling an indication of at least one network function to which a subscription request for the network function service producer is to be addressed.

The exchanging signalling may comprise receiving, from the network function service producer, an indication of a status information of a parameter of the network function service producer, wherein the apparatus comprises using the indication of the current and/or projected load to determine whether the direct or indirect mechanism is preferred.

According to a sixteenth aspect, there is provided a method for an apparatus for a network repository function, the method comprising: receiving, from a network function service producer, an indication of whether a direct or an indirect subscription mechanism is optimal for requesting a subscription to events at the network function service producer; storing the received indication; and providing the received indication to a network function service consumer.

The method may comprise: receiving, from a network function service producer, a modified indication of whether a direct or an indirect subscription mechanism is optimal for requesting a subscription to events at the network function service producer, wherein the modified indication indicates the opposite subscription mechanism type to the type indicated by the received subscription mechanism; replacing the received indication with the modified indication; and providing the modified indication to a network function service consumer in response to receipt of a request for information about the network function service producer from the network function service consumer.

According to a seventeenth aspect, there is provided a method for an apparatus for a network function service consumer, the method comprising: signalling, to a network function, an indication that the apparatus is capable of requesting a subscription from a network function service producer using both a direct signalling mechanism and an indirect signalling mechanism; and receiving, from the network function, an indication of whether the apparatus should use the direct mechanism or the indirect mechanism for subscribing to the network function service producer.

The method may comprise signalling a subscription request to the service producer using the indicated mechanism.

The network function may be the network function service producer, and said indication that the apparatus is capable of requesting a subscription from a network function service producer using both a direct signalling mechanism and an indirect signalling mechanism may comprise an explicit indication that the apparatus is capable of requesting a subscription from a network function service producer using both a direct signalling mechanism and an indirect signalling mechanism.

The network function may be a network analytics function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

The network function may be a network repository function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

According to an eighteenth aspect, there is provided a method for an apparatus for a network function, the method comprising: receiving from a network function service consumer, an indication that the apparatus is capable of requesting a subscription from a network function service producer using both a direct signalling mechanism and an indirect signalling mechanism; and signalling, to the network function service consumer, an indication of whether the apparatus should use the direct mechanism or the indirect mechanism for subscribing to the network function service producer.

The network function may be the network function service producer, and said indication that the apparatus is capable of requesting a subscription from a network function service producer using both a direct signalling mechanism and an indirect signalling mechanism may comprise an explicit indication that the apparatus is capable of requesting a subscription from a network function service producer using both a direct signalling mechanism and an indirect signalling mechanism.

The network function may be a network analytics function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

The network function may be a network repository function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

According to a nineteenth aspect, there is provided an apparatus for a network function service producer, the apparatus comprising: determining circuitry for determining whether a direct or an indirect subscription mechanism is optimal for the network function service producer: and signalling circuitry for signalling an indication of the determined optimal subscription mechanism to a network function.

The network function may be a network repository function.

The network function may be a network function service consumer, and the apparatus comprises: receiving circuitry for receiving from the network function, a subscription request for subscribing to receive information about at least one event at the network function service producer, wherein the receiving is performed prior to said signalling an indication of the determined optimal subscription mechanism.

The determined optimal subscription mechanism may be an indirect subscription mechanism, and the signalling circuitry for signalling the indication of the determined optimal subscription mechanism may comprise signalling circuitry for signalling a rejection of the subscription request.

The rejection may comprise an explicit indication that an indirect subscription mechanism is an optimal subscription mechanism for the network function service producer when the subscription request received at the network function service producer is received via a direct subscription request.

The apparatus may comprise: exchanging circuitry for exchanging signalling with a network analytics function at a first time to determine whether the direct or indirect subscription mechanism is optimal for the network function service producer; exchanging circuitry for exchanging signalling with the network analytics function at a second time to determine whether a direct or an indirect subscription mechanism is optimal for the network function service producer, wherein the second time is later than the first time; and when the determination at the second time results in a different optimal subscription mechanism to the optimal subscription mechanism determined at the first time, signalling circuitry for signalling the different optimal subscription mechanism to the network function.

According to a twentieth aspect, there is provided an apparatus for a network function service consumer, the apparatus comprising: receiving circuitry for receiving, from a network function, an indication of whether a direct or an indirect subscription mechanism is optimal for requesting a subscription to events at a network function service producer; and signalling circuitry for signalling a subscription request in accordance with the received indication to use the signalled optimal subscription mechanism.

The network function may be a network analytics function, and the apparatus may comprise: signalling circuitry for signalling the network function for determining the optimal subscription mechanism, wherein the signalling circuitry for signalling the network function comprises signalling circuitry for signalling an identification of a service to be subscribed to and/or an identification of the network function service producer.

The signalling circuitry for signalling the network function may comprise signalling circuitry for signalling a preference of the network function service consumer for using a direct and/or an indirect subscription.

The network function may be a network repository function.

The network function may be the network function service producer, and the apparatus may comprise: signalling circuitry for signalling the network function a subscription request before receiving, from the network function, the indication of whether a direct or an indirect subscription mechanism is optimal for requesting a subscription to events at a network function service producer.

The indication may indicate that an indirect subscription mechanism is preferred, and the signalling circuitry for signalling a subscription request in accordance with the received indication may comprise signalling circuitry for signalling a subscription request for the network function service producer to a proxy network function.

The indication may indicate that a direct subscription mechanism is preferred, and the signalling circuitry for signalling a subscription request in accordance with the received indication may comprise signalling circuitry for signalling a subscription request for the network function service producer to the network function service producer.

According to a twenty first aspect, there is provided an apparatus for a network analytics function, the apparatus comprising: receiving circuitry for receiving, from a network function, a request to determine whether a direct or an indirect subscription mechanism is optimal for requesting a subscription to events at a network function service producer; exchanging circuitry for exchanging signalling with the network function service producer to determine whether a direct or an indirect subscription mechanism is optimal for requesting a subscription to events at the network function service producer; and signalling circuitry for signalling an indication of the determined optimal subscription mechanism to a network function.

The network function may be the network function service producer.

The network function may be a network function service consumer, and the apparatus may comprise receiving circuitry for receiving, from the network function, an identification of a service to be subscribed to and/or an identification of the network function service producer.

The receiving circuitry for receiving may comprise receiving circuitry for receiving, from the network function, a preference of the network function service consumer for using a direct and/or an indirect subscription.

The signalling circuitry for signalling an indication of the determined optimal subscription mechanism to a network function may comprise signalling circuitry for signalling an indication of at least one network function to which a subscription request for the network function service producer is to be addressed.

The exchanging circuitry for exchanging signalling may comprise receiving circuitry for receiving, from the network function service producer, an indication of a status information of a parameter of the network function service producer, wherein the apparatus comprises using circuitry for using the indication of the current and/or projected load to determine whether the direct or indirect mechanism is preferred.

According to a twenty second aspect, there is provided an apparatus for a network repository function, the apparatus comprising: receiving circuitry for receiving, from a network function service producer, an indication of whether a direct or an indirect subscription mechanism is optimal for requesting a subscription to events at the network function service producer; storing circuitry for storing the received indication; and providing circuitry for providing the received indication to a network function service consumer.

The apparatus may comprise: receiving circuitry for receiving, from a network function service producer, a modified indication of whether a direct or an indirect subscription mechanism is optimal for requesting a subscription to events at the network function service producer, wherein the modified indication indicates the opposite subscription mechanism type to the type indicated by the received subscription mechanism; replacing circuitry for replacing the received indication with the modified indication; and providing circuitry for providing the modified indication to a network function service consumer in response to receipt of a request for information about the network function service producer from the network function service consumer.

According to a twenty third aspect, there is provided an apparatus for a network function service consumer, the apparatus comprising: signalling circuitry for signalling, to a network function, an indication that the apparatus is capable of requesting a subscription from a network function service producer using both a direct signalling mechanism and an indirect signalling mechanism; and receiving circuitry for receiving, from the network function, an indication of whether the apparatus should use the direct mechanism or the indirect mechanism for subscribing to the network function service producer.

The apparatus may comprise signalling circuitry for signalling a subscription request to the service producer using the indicated mechanism.

The network function may be the network function service producer, and said indication that the apparatus is capable of requesting a subscription from a network function service producer using both a direct signalling mechanism and an indirect signalling mechanism may comprise an explicit indication that the apparatus is capable of requesting a subscription from a network function service producer using both a direct signalling mechanism and an indirect signalling mechanism.

The network function may be a network analytics function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

The network function may be a network repository function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

According to a twenty fourth aspect, there is provided an apparatus for a network function, the apparatus comprising: receiving circuitry for receiving from a network function service consumer, an indication that the apparatus is capable of requesting a subscription from a network function service producer using both a direct signalling mechanism and an indirect signalling mechanism; and signalling circuitry for signalling, to the network function service consumer, an indication of whether the apparatus should use the direct mechanism or the indirect mechanism for subscribing to the network function service producer.

The network function may be the network function service producer, and said indication that the apparatus is capable of requesting a subscription from a network function service producer using both a direct signalling mechanism and an indirect signalling mechanism may comprise an explicit indication that the apparatus is capable of requesting a subscription from a network function service producer using both a direct signalling mechanism and an indirect signalling mechanism.

The network function may be a network analytics function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

The network function may be a network repository function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

According to a twenty fifth aspect, there is provided non-transitory computer readable medium comprising program instructions for causing an apparatus for a network function service producer to perform at least the following: determine whether a direct or an indirect subscription mechanism is optimal for the network function service producer: and signal an indication of the determined optimal subscription mechanism to a network function.

The network function may be a network repository function.

The network function may be a network function service consumer, and the apparatus may be caused to: receive from the network function, a subscription request for subscribing to receive information about at least one event at the network function service producer, wherein the receiving is performed prior to said signalling an indication of the determined optimal subscription mechanism.

The determined optimal subscription mechanism may be an indirect subscription mechanism, and the signalling the indication of the determined optimal subscription mechanism may comprise signalling a rejection of the subscription request.

The rejection may comprise an explicit indication that an indirect subscription mechanism is an optimal subscription mechanism for the network function service producer when the subscription request received at the network function service producer is received via a direct subscription request.

The apparatus may be caused to: exchange signalling with a network analytics function at a first time to determine whether the direct or indirect subscription mechanism is optimal for the network function service producer; exchange signalling with the network analytics function at a second time to determine whether a direct or an indirect subscription mechanism is optimal for the network function service producer, wherein the second time is later than the first time; and when the determination at the second time results in a different optimal subscription mechanism to the optimal subscription mechanism determined at the first time, signal the different optimal subscription mechanism to the network function.

According to a twenty sixth aspect, there is provided non-transitory computer readable medium comprising program instructions for causing an apparatus for a network function service consumer to perform at least the following: receive, from a network function, an indication of whether a direct or an indirect subscription mechanism is optimal for requesting a subscription to events at a network function service producer; and signal a subscription request in accordance with the received indication to use the signalled optimal subscription mechanism.

The network function may be a network analytics function, and the apparatus may be caused to: signal the network function for determining the optimal subscription mechanism, wherein the signalling the network function comprises signalling an identification of a service to be subscribed to and/or an identification of the network function service producer.

The signalling the network function may comprise signalling a preference of the network function service consumer for using a direct and/or an indirect subscription.

The network function may be a network repository function.

The network function may be the network function service producer, and the apparatus may be caused to: signal the network function a subscription request before receiving, from the network function, the indication of whether a direct or an indirect subscription mechanism is optimal for requesting a subscription to events at a network function service producer.

The indication may indicate that an indirect subscription mechanism is preferred, and the signalling a subscription request in accordance with the received indication may comprise signalling a subscription request for the network function service producer to a proxy network function.

The indication may indicate that a direct subscription mechanism is preferred, and the signalling a subscription request in accordance with the received indication may comprise signalling a subscription request for the network function service producer to the network function service producer.

According to a twenty seventh aspect, there is provided non-transitory computer readable medium comprising program instructions for causing an apparatus for a network analytics function to perform at least the following: receive, from a network function, a request to determine whether a direct or an indirect subscription mechanism is optimal for requesting a subscription to events at a network function service producer; exchange signalling with the network function service producer to determine whether a direct or an indirect subscription mechanism is optimal for requesting a subscription to events at the network function service producer; and signal an indication of the determined optimal subscription mechanism to a network function.

The network function may be the network function service producer.

The network function may be a network function service consumer, and the apparatus may be caused to receive, from the network function, an identification of a service to be subscribed to and/or an identification of the network function service producer.

The receiving may comprise receiving, from the network function, a preference of the network function service consumer for using a direct and/or an indirect subscription.

The signalling an indication of the determined optimal subscription mechanism to a network function may comprise signalling an indication of at least one network function to which a subscription request for the network function service producer is to be addressed.

The exchanging signalling may comprise receiving, from the network function service producer, an indication of a status information of a parameter of the network function service producer, wherein the apparatus is caused to use the indication of the current and/or projected load to determine whether the direct or indirect mechanism is preferred.

According to a twenty eighth aspect, there is provided non-transitory computer readable medium comprising program instructions for causing an apparatus for a network repository function to perform at least the following: receive, from a network function service producer, an indication of whether a direct or an indirect subscription mechanism is optimal for requesting a subscription to events at the network function service producer; store the received indication; and provide the received indication to a network function service consumer.

The apparatus may be caused to: receive, from a network function service producer, a modified indication of whether a direct or an indirect subscription mechanism is optimal for requesting a subscription to events at the network function service producer, wherein the modified indication indicates the opposite subscription mechanism type to the type indicated by the received subscription mechanism; replacing the received indication with the modified indication; and provide the modified indication to a network function service consumer in response to receipt of a request for information about the network function service producer from the network function service consumer.

According to a twenty ninth aspect, there is provided non-transitory computer readable medium comprising program instructions for causing an apparatus for a network function service consumer to perform at least the following: signal, to a network function, an indication that the apparatus is capable of requesting a subscription from a network function service producer using both a direct signalling mechanism and an indirect signalling mechanism; and receive, from the network function, an indication of whether the apparatus should use the direct mechanism or the indirect mechanism for subscribing to the network function service producer.

The apparatus may be caused to signal a subscription request to the service producer using the indicated mechanism.

The network function may be the network function service producer, and said indication that the apparatus is capable of requesting a subscription from a network function service producer using both a direct signalling mechanism and an indirect signalling mechanism may comprise an explicit indication that the apparatus is capable of requesting a subscription from a network function service producer using both a direct signalling mechanism and an indirect signalling mechanism.

The network function may be a network analytics function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

The network function may be a network repository function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

According to a thirtieth aspect, t there is provided non-transitory computer readable medium comprising program instructions for causing an apparatus for a network function service producer to perform at least the following: receive from a network function service consumer, an indication that the apparatus is capable of requesting a subscription from a network function service producer using both a direct signalling mechanism and an indirect signalling mechanism; and signal, to the network function service consumer, an indication of whether the apparatus should use the direct mechanism or the indirect mechanism for subscribing to the network function service producer.

The network function may be the network function service producer, and said indication that the apparatus is capable of requesting a subscription from a network function service producer using both a direct signalling mechanism and an indirect signalling mechanism may comprise an explicit indication that the apparatus is capable of requesting a subscription from a network function service producer using both a direct signalling mechanism and an indirect signalling mechanism.

The network function may be a network analytics function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

The network function may be a network repository function, and said indication that the apparatus is capable of requesting a subscription from a network function service producer using both a direct signalling mechanism and an indirect signalling mechanism may comprise an implicit indication that the apparatus is capable of requesting a subscription from a network function service producer using both a direct signalling mechanism and an indirect signalling mechanism.

According to a thirty first aspect, there is provided a computer program product stored on a medium that may cause an apparatus to perform any method as described herein.

According to a thirty second aspect, there is provided an electronic device that may comprise apparatus as described herein.

According to a thirty third aspect, there is provided a chipset that may comprise an apparatus as described herein.

### Brief description of Figures

Examples will now be described, by way of example only, with reference to the accompanying Figures in which:
Figures 1A and 1B show a schematic representation of part of an example 5G system;
Figure 2 shows a schematic representation of a network apparatus;
Figure 3 shows a schematic representation of a user equipment;
Figure 4 shows a schematic representation of a non-volatile memory medium storing instructions which when executed by a processor allow a processor to perform one or more of the steps of the methods of some examples;
Figure 5 shows a schematic representation of a network;
Figures 6A to 8 show schematic representation of direct and indirect subscription mechanisms;
Figures 9 to 12 are signalling diagrams illustrating example signalling; and
Figures 13 to 18 are flow charts illustrating potential operations that may be performed by apparatus described herein.

### Detailed description

In the following, certain aspects are explained with reference to mobile communication devices capable of communication via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to other wireless communication systems with analogous components (for example, current 6G proposals).

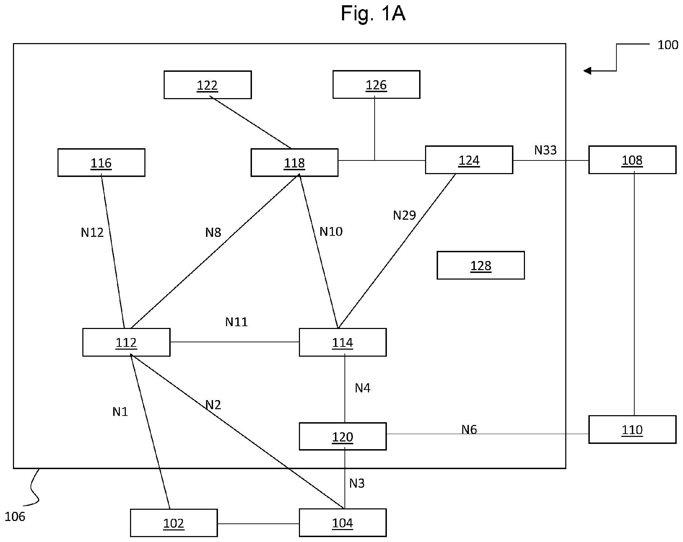

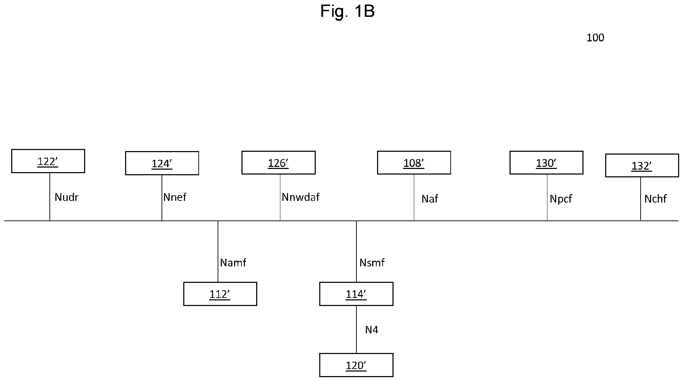

Before explaining in detail the exemplifying embodiments, certain general principles of a 5G wireless communication system are briefly explained with reference to Figures 1A and 1B.

Figure 1A shows a schematic representation of part of an example 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

The 5G RAN may comprise one or more gNodeB (gNB) distributed unit functions connected to one or more gNodeB (gNB) unit functions. The RAN may comprise one or more access nodes.

The 5GC 106 may comprise one or more Access and Mobility Management Functions (AMF) 112, one or more Session Management Functions (SMF) 114, one or more authentication server functions (AUSF) 116, one or more unified data management (UDM) functions 118, one or more user plane functions (UPF) 120, one or more unified data repository (UDR) functions 122, one or more network repository functions (NRF) 128, and/or one or more network exposure functions (NEF) 124. Although NRF 128 is not depicted with its interfaces, it is understood that this is for clarity reasons and that NRF 128 may have a plurality of interfaces with other network functions.

The 5GC 106 also comprises a network data analytics function (NWDAF) 126. The NWDAF is responsible for providing network analytics information upon request from one or more network functions or apparatus within the network. Network functions can also subscribe to the NWDAF 126 to receive information therefrom. Accordingly, the NWDAF 126 is also configured to receive and store network information from one or more network functions or apparatus within the network. The data collection by the NWDAF 126 may be performed based on at least one subscription to the events provided by the at least one network function.

The network may further comprise a management data analytics service (MDAS). The MDAS may provide data analytics of different network related parameters including for example load level and/or resource utilisation. For example, the MDAS for a network function (NF) can collect the NF's load related performance data, e.g., resource usage status of the NF. The analysis of the collected data may provide forecast of resource usage information in a predefined future time. This analysis may also recommend appropriate actions e.g., scaling of resources, admission control, load balancing of traffic, etc.

Figure 1B shows a schematic representation of a 5GC 106' represented in current 3GPP specifications.

Figure 1B shows a UPF 120' connected to an SMF 114' over an N4 interface. The SMF 114' is connected to each of a UDR 122', an NEF 124', an NWDAF 126', an AF 108', a Policy Control Function (PCF) 130', an AMF 112', and a Charging function 132' over an interconnect medium that also connects these network functions to each other.

3GPP refers to a group of organizations that develop and release different standardized communication protocols. 3GPP is currently developing and publishing documents related to Release 16, relating to 5G technology, with Release 17 currently being scheduled for 2022.

Current 3GPP communication specifications describe the use of a Subscribe/Notify procedure. Under this procedure, an entity (e.g. a network function) may subscribe to receive a notification when a particular triggering event has occurred at or to another entity. The Subscribe/Notify paradigm is used in almost all interfaces of the 5G core network.

Its usage in services of 5G Network Functions (NFs) is described in detail in 3GPP TS 29.501 clause 4.6.2. With regard to the general principle, this clause describes that Subscribe/Notify communication between 5G Core (5GC) NFs can be used to keep involved NFs (e.g. consumers of a service) informed of data changes or events that occur at another NF (e.g. a producer of the service). A notification is a message that contains information about the event. Service consumer NFs (clients) subscribe to notifications at the service provider NF (e.g. server). Information in notifications may be delivered either explicitly or implicitly. When the subscribed change/event occurs at the service producer NF, notifications are sent from the service producer NF to the service consumer NFs (assuming that the failure does not relate to failing to send notifications).

The widespread usage of this Subscribe/Notify mechanism can lead to situations in which an NF service producer has received a large number of subscriptions (potentially for the same event) and is therefore configured to send an equal number of notifications upon the occurrence of this event. Although the number of subscriptions depends on the network and the implementation of its NFs, the number certainly has the potential to reach the scale of hundreds or thousands in certain deployments, especially with the introduction of various analytics that foresee hierarchical Network Data and Analytics Functions (NWDAF) to subscribe to numerous types of events of different NF service producers, as well as the exposure of more and more network events to Application Functions (AF) (as described in 3GPP TS 23.288). This may lead to increased signalling and high load or overload situations of various NFs.

Mechanisms have already been developed for delegating (or merging) the subscriptions to certain NF service producers, with the purpose of avoiding such situations. For example, 3GPP TS 23.288 defines the Data Collection Coordination Function (DCCF), which is a network function that is configured to offer services for receiving subscriptions to events of other NFs. This means that the DCCF can merge the subscriptions of many NF service consumers to one single subscription, which the DCCF then signals towards the NF service producer that identifies the event. This means that a single subscription may effectively service a plurality of network functions. Similarly, it is possible for an NF to register information about events that have occurred at another NF, which acts as an event database, with NF service consumers interested in the event being able subscribe to this database NF. An example of this would be the use of a Unified Data Repository (UDR). Subscribing to such a database means that NF service consumers may subscribe to the database instead of subscribing directly to the NF service producer.

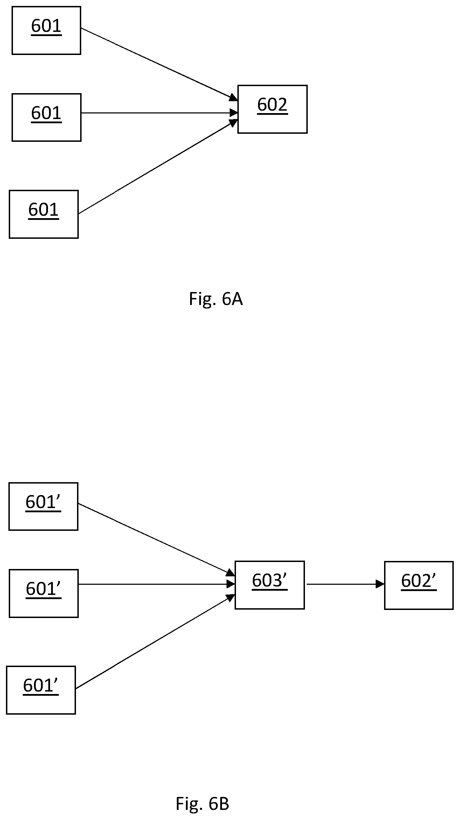

Figures 6A and 6B illustrate examples of direct and indirect subscriptions to events happening at an AMF. The indirect subscription case is illustrated by the use of a DCCF as a proxy. It is understood that the use of a database (e.g. a UDR, as mentioned above) as an analogous example of an indirect subscription, and that references in the examples below to a DCCF may also be applied in respect of both other amalgamating functions, including subscription databases.

Figure 6A illustrates a plurality of NWDAFs 601 that each send a respective subscription request to an AMF 602. This is an example of direct subscriptions to AMF events.

Figure 6B illustrates a plurality of NWDAFs 601' that each send a respective subscription request for AMF 602' to a DCCF 603'. The DCCF acts as a proxy for these subscription requests, and sends a single subscription request to AMF 602' on behalf of these NWDAFs 601'. This is an example of an indirect subscription to AMF events.

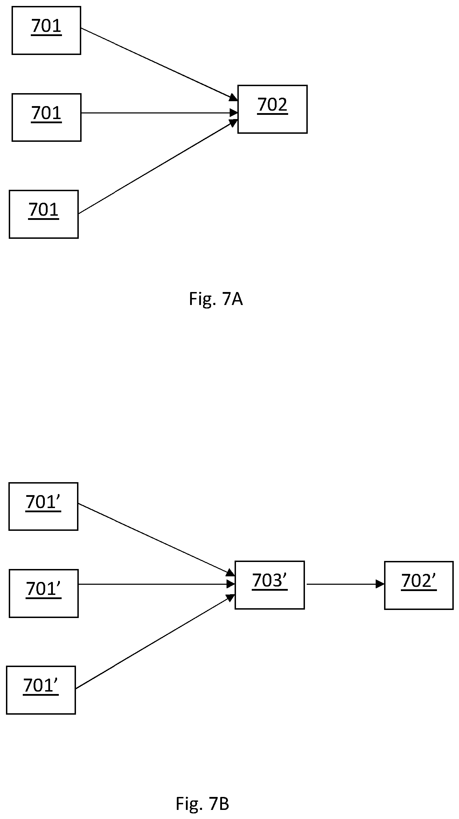

Figures 7A and 7B illustrate examples of direct and indirect subscriptions to PCF events. The example of an indirect subscription provided in Figure 7B relates to the use of an UDR as a database. It is understood that this is merely one example, and that other functions/database may provide analogous functions.

Figure 7A illustrates a plurality of NWDAFs 701 that each send a respective subscription request to a PCF 702. This is an example of direct subscriptions to PCF events.

Figure 7B illustrates a plurality of NWDAFs 701' that each send a respective subscription request for PCF 702' to a UDR 703'. The UDR 703' acts as a proxy for these subscription requests, and sends a single subscription request to PCF 702' on behalf of these NWDAFs 701'. This is an example of indirect subscriptions to PCF events.

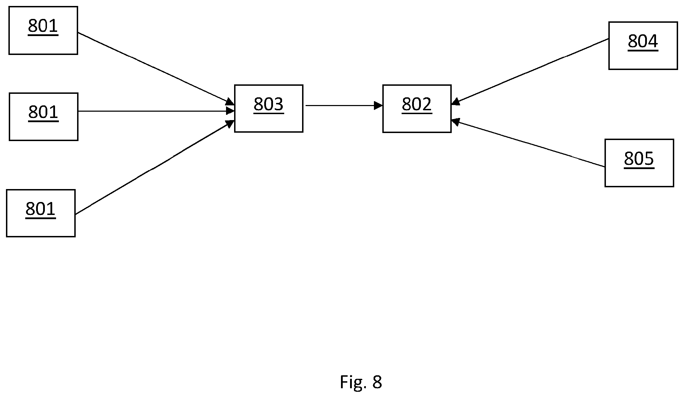

Figure 8 illustrates an example deployment in which direct and indirect subscriptions exist at the same time in a 5G core network deployment.

Figure 8 illustrates a plurality of NWDAFs 801 that each send a respective subscription request for AMF 802 to a DCCF 803. The DCCF 803 acts as a proxy for these subscription requests, and sends a single subscription request to AMF 802 on behalf of these NWDAFs 801. This is an example of indirect subscriptions to AMF events. The AMF 802 further receives separate subscription request from NWDAF 804 and PCF 805. These further received subscription requests are examples of direct subscription requests.

In all of the examples of Figures 6 to 8, an event notification for each subscription is generated upon event detection.

Since NF service consumers may support both direct and indirect subscription schemes and the selection of the subscription scheme for each individual subscription is statically determined by the NF service consumer configuration. As the conditions in the network are dynamically changing, suboptimal or low-performing network behaviour can occur over the NF service lifetime.

For example, suboptimal performance may arise when an NF producer is overloaded with many direct subscriptions which could be serviced by a single merged subscription instead. As another example, this suboptimal performance may occur when increased hardware resources and increased overall signalling is used in order to operate a DCCF that brings no significant benefit (e.g. because it merges no or very few subscriptions).

In addition, there are different pieces of information and various mechanisms that can be used for selecting a target NF service producer with the help of the Network Repository Function (NRF, see 3GPP TS 29.510). This selection may be performed, for example, based on NF load and further information about running NF instances. However, these mechanisms can be used in the 5G core only for selecting an NF service producer among NF service producers of the same type (e.g. AMF1 vs AMF2) and are not defined in a way that can be used for selecting among the aforementioned alternatives, i.e. services of an NF service producer and services of an NF that acts as a proxy (e.g. Namf_XXX_Subscribe vs Ndccf_XXX_Subscribe). This means that selecting the right scheme is still left to the implementation/configuration at the NFs.

The present application identifies that although the most efficient subscription scheme depends on the load and context of the network and the individual NFs, there is no mechanism in the 5G core network for considering this when dynamically determining the subscription scheme to be applied for each individual subscription when both direct and indirect subscriptions are possible.

Currently, each NF service consumer individually and independently decides if it will subscribe to a certain event directly at the core responsible NF service producer or a proxy NF. Changing the subscription scheme between direct and indirect would only be possible by manually modifying consumer NF configuration or by implementing dynamic internal NF consumer logic for overwriting the existing configuration (automated but without known prior art about the exact logic and the involved interactions). The main drawback of this approach is that the NF consumer does not have the necessary information to decide on what is the optimal choice. The latter requires coordination with the available proxies and the NF service producers.

The following proposes a system and a method for context-based adaptation of the subscription schemes (i.e. adapting/selection between direct and indirect subscriptions) used in the 5G core network. This may be performed via the cooperation of the concerned NF service producers, consumers, and/or proxy NFs, potentially enhanced by data analytics support.

The following discloses qualities and/or actions of an NF service consumer (e.g. to provide an indication about its support of direct and/or indirect subscription upon requesting to subscribe to an event of an NF service producer). The following further discloses qualities and/or actions of an NF service producer (e.g. an NF service producer indication about the currently preferrable subscription scheme, as well as an alternative in which this indication is provided indirectly. This indication may be registered in the NRF).

There is further disclosed a negotiation mechanism (i.e. sequence of messages) and standard operations extensions for determining and enforcing a subscription scheme for new and/or existing subscriptions.

Further, there is disclosed a new analytics service, which may be provided by the NWDAF based on data collected from NF service producers, consumers, proxies, and/or Operations, Administration and Maintenance (OAM) entities. This new analytics service may be optionally used either by an NF service consumer or an NF service producer as a hint to the currently optimal subscription scheme for a given subscription.

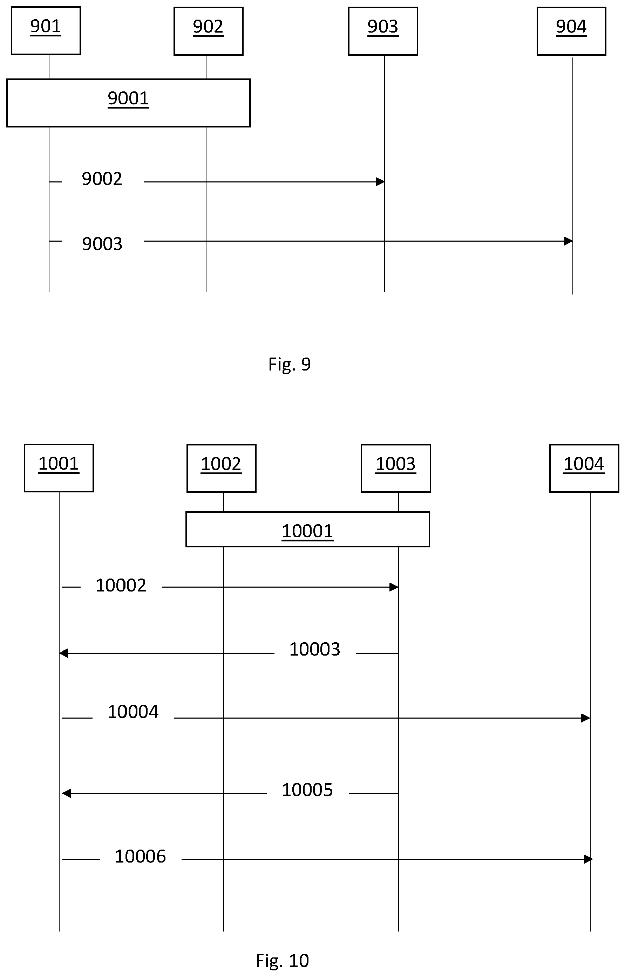

Examples of the proposed mechanism will be illustrated with respect to the following three examples of Figures 9 to 11.

In the first example, the final determination of the subscription scheme is still performed by the NF service consumer. However, contrary to previous mechanisms, this selection may be performed in dependence on the outcome of a new network data analytics procedure for finding the optimal subscription scheme. This first example will also be referred to herein as the "subscription scheme analytics procedure".

This first example is illustrated with respect to Figure 9.

Figure 9 illustrates potential signalling between an NF service consumer 901, an NWDAF 902, an NF service producer 903 (e.g. AMF, SMF, etc), and a proxy function 904 (e.g. a DCCF).

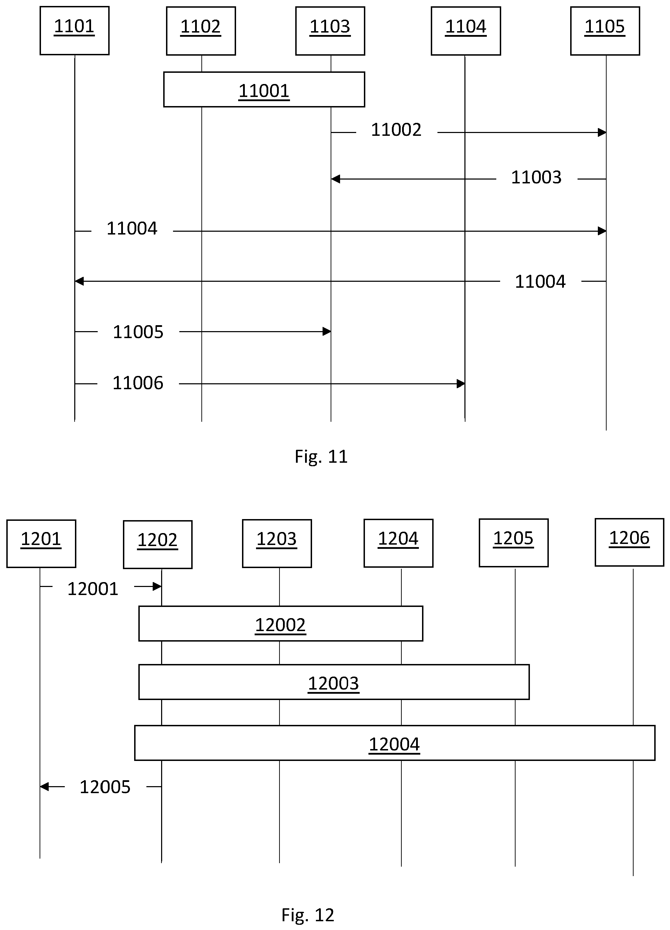

At 9001, the NF service consumer 901 and the NWDAF 902 exchange signalling for determining an optimal subscription scheme for a service offered by NF service producer 903, using signalling as described below in Figure 12, which identifies a "preferred target", which indicates whether direct or indirect subscription requests are to be made.

Depending on the result of the determination of 9001, the NF service consumer 901 performs either 9002 or 9003.

9002 is performed when the determination of 9001 indicates that a direct subscription request is to be signalled. At 9002, the NF service consumer 901 sends a subscribe request to the NF service producer 903. The request may be an Nxxx_XXX_Subscribe message, where xxx identifies a network function type involved in the signalling of the request and XXX is the service of interest. In other words, the NF service producer may be any type of NF and/or be applicable to multiple types of services provided in the network. Further references to xxx and XXX are to be understood in an analogous manner.

9003 is performed when the determination of 9001 indicates that an indirect subscription request is to be signalled (e.g. that a direct subscription request is not to be signalled). At 9003, the NF service consumer 901 sends a subscribe request to the proxy function 904. The NF service consumer may perform a discovery to find the proxy or the NF service consumer may be pre-configured to use a certain proxy. How the NF service consumer determines a proxy to use may be defined according to the communication protocol(s) under which the NF service consumer is defined. The request may be an Nproxy_XXX_Subscribe request. This request is an indirect subscription request.

In the second example, the desired functionality is achieved by extending the Subscribe/Notify messages between the NF service consumer and the NF service producer in order to exchange/negotiate before and/or during the subscription scheme to be used. This example leaves the final determination of the subscription scheme to the NF service producer.

Figure 10 illustrates this second example.

Figure 10 illustrates potential signalling between an NF service consumer 1001, an NWDAF 1002, an NF service producer 1003 (e.g. AMF, SMF, etc.), and a proxy function 1004 (e.g. a DCCF).

At 10001, the NF service producer 1003 and the NWDAF 1002 exchange signalling to determine an optimal subscription scheme for a service offered by NF service producer 903, using signalling as described below in Figure 12, which identifies a "preferred target", which indicates whether direct or indirect subscription requests are to be made. It is understood that instead of performing this determination, the optimal subscription scheme may instead be configured by an OAM (not shown).

At 10002, the NF service consumer 1001 signals a subscribe request to the NF service producer 1003. This subscribe request may indicate which schemes the NF service consumer 1001 supports (i.e. whether the NF service consumer 1001 supports signalling direct and/or indirect subscription requests). This subscribe request may be an Nxxx_XXX_Subscribe request that has been configured to comprise this new indication of supported scheme.

At 10003, the NF service producer 1003 responds to the subscribe request of 10002. The signalling provided in 10003 depends on both the result of the determining of 10001 and the indicated schemes of 10002.

For example, when the determining of 10001 determines that a direct subscription scheme is an optimal mechanism to be used and the indication of 10002 indicates that the NF service consumer 1001 supports at least the direct mechanism, the signalling of 10003 may be a creation indication to indicate that the requested subscription of 10002 has been created. As another example, when the determining of 10001 determines that an indirect subscription scheme is an optimal mechanism to be used and the indication of 10002 indicates that the NF service consumer 1001 only supports the direct mechanism, the signalling of 10003 may be a creation indication to indicate that the requested subscription of 10002 has been created. Using current 3GPP terminology, the creation indication may be a "201 Created" indication.

However, when the determining of 10001 determines that an indirect subscription scheme is an optimal mechanism to be used and the indication of 10002 indicates that the NF service consumer 1001 supports at least the indirect mechanism, the signalling of 10003 may be an indication that the NF service consumer 1001 should perfom an indirect subscription mechanism. This causes the NF service consumer 1001 to perform 10004.

At 10004, the NF service consumer 1001 sends a subscribe request to the proxy function 1004. The request may be an Nproxy_XXX_Subscribe request. This request is an indirect subscription request.

If the signalling of 10003 was a created indication, the signalling of 10005 and 10006 may be performed at a later time. This signalling of 10005 and 10006 is performed subsequent to a determination by the NF service producer 1003 that an indirect subscription request is instead a preferred option. This may occur, for example, subsequent to further signalling with NWDAF 10002, and/or subsequent to a further determination of the NF service producer's 1003 current load.

At 10005, the NF service producer 1003 signals the NF service consumer 1001. This signalling of 10005 may indicate that the subscription scheme is to be changed to the indirect subscription scheme. This signalling may be performed via an Nxxx_XXX_Notify message that has been configured to comprise an indication that the subscription scheme is to be changed from the direct scheme to the indirect scheme.

In response to the signalling of 10005, the NF service consumer 1001 sends a subscribe request to the proxy function 1004.The request may be an Nproxy_XXX_Subscribe request. This request is an indirect subscription request.

In the third example, the Subscribe/Notify messages are performed in a standard way, but they are preceded or complemented by interactions of both the NF service consumer and the NF service producer with a network repository function (NRF). This interaction with the NRF may be performed both before and during the lifetime of the subscription. This interaction is performed in order to implicitly exchange information about the subscription scheme to be used, which may again determined by the NF service producer.

This third example is illustrated with respect to Figure 11. It is understood that at least examples 2 and 3 may be combined. This is discussed further below.

Figure 11 illustrates potential signalling between an NF service consumer 1101, an NWDAF 1102, an NF service producer 1103 (e.g. AMF, SMF, etc.), a proxy function 1104 (e.g. a DCCF), and an NRF 1105.

At 11001, the NF service producer 1103 and the NWDAF 1102 exchange signalling to determine an optimal subscription scheme for a service offered by NF service producer 903, using signalling as described below in Figure 12, which identifies a "preferred target", which indicates whether direct or indirect subscription requests are to be made. It is understood that instead of performing this determination, the optimal subscription scheme may instead be configured by an OAM (not shown).

At 11002, the NF service producer 1103 requests the registration of the result of the determination of 11001 with the NRF 11005 (i.e. whether a direct or indirect subscription is preferred by the NF service producer 1103).

At 11003, the NRF 1105 responds to the signalling of 11002 to indicate that the requested registration of 11002 has been performed.

At 11004, the NF service consumer 1101 signals the NRF 1105. This signalling is a discovery request to discover a network function for performing a particular service (e.g. to discover the NF service producer 1103). This request may be a "Discover Service Nxxx" message. This message may have been configured to indicate that an indication of the preferred subscription scheme (e.g. direct or indirect subscription) for the service provider being discover is requested.

At 11005, the NRF 1105 responds to the signalling of 11004. This response identifies the NF service producer 1103 and comprises the requested indication of which subscription scheme is preferred.

When the signalling of 11005 indicates that the preferred subscription scheme is a direct subscription, the NF service consumer 1101 performs 11006. At 11006, the NF service consumer 1101 signals the NF service producer 1103 a direct subscription request. This direct subscription request may be an Nxxx_XXX_Subscribe message.

When the signalling of 11005 indicates that the preferred subscription scheme is an indirect subscription, the NF service consumer 1101 performs 11007. At 11007, the NF service consumer 1101 sends a subscribe request to the proxy function 1104. The request may be an Nproxy_XXX_Subscribe request. This request is an indirect subscription request.

As mentioned above, examples 2 and 3 may be combined together. For example, the NF service consumer may be configured to discover the preferred scheme at the NF service producer and signal a service request to the NF service producer accordingly. If/When the NF service consumer determines to change the subscription scheme (e.g. from direct to indirect or vice-versa (e.g. subsequent to some indication received via the OAM and/or the NWDAF)), then the NF service producer may instruct the NF service consumer to change the subscription scheme (e.g. from direct to indirect or vice versa). The NF service consumer may then comply with the received instruction.

As indicated above, all of these examples may optionally use the subscription scheme analytics procedure described below in relation to Figure 12.

The subscription scheme analytics procedure is a service offered by the NWDAF or the Management Data Analytics Service (MDAS) (and so consequently references made above and below to the NWDAF may be considered to also refer to the MDAS), which receives inputs for specifying the intended subscription and restricting the set of candidate NF service producers and proxies, collects relevant information from a set of third entities (NRF, candidate NF service producers and proxies, OAM entities), and provides in its response the preferred subscription scheme for the intended subscription.

Figure 12 illustrates potential signalling that may be performed between an NF service consumer 1201, an NWDAF 1202, an NRF 1203, an NF service producer 1204, a proxy 1205 and an OAM 1205.

At 12001, the NF service consumer 1201 signals a subscription request to the NWDAF 1202 for subscribing to receive from the NWDAF 1202 support for deciding how to subscribe to a service. This subscription request may be labelled as an "Nnwdaf_AnalyticsSubscription_Subscribe request, using current 3GPP terminology. This request may be configured to comprise an indication that an indication of a preferred subscription scheme for at least one NF service producer is requested (e.g. direct or indirect). It is understood that although 12001 (and subsequent steps of Figure 12) is described in respect of the NF service consumer, that analogous steps may be performed by an NF service producer for the examples in which the NF service producer is the entity that interacts with the NWDAF for determining a preferred subscription scheme. It is also understood that, although not shown, a response to the signalling of 1201 from the NWDAF may be provided, and may comprise a subscription identification for identifying the subscription to which the request relates.

This subscription request may comprise information about the event (labelled herein as "targetEvent") to which the NF service consumer 1201 would like to subscribe (or is already subscribed) and for which the NF service consumer 1201 is requesting support for deciding how to subscribe. The subscription request may comprise an indication of at least one candidate target NFs which expose this event (either directly or indirectly). The target candidate NFs may be, for example, NF service providers and/or proxies.

The target candidate NFs and/or proxies may be specified on at least one of an instance level (when a single target candidate NF is indicated by a single identifier) or on a set level (when a plurality of target candidate NFs are identified by a single identifier). When not all target candidate NFs are indicated in the request, the NWDAF may utilise local configuration, internal logic, and/or potential interactions with other NFs (e.g. NRF) in order to find at least one target candidate NFs.

When the NWDAF 1202 does not comprise sufficient information about the NF service producer 1204 for responding to the signalling of 12001, the NWDAF performs 12002.

At 12002, the NWDAF 1202, NRF 1203 and/or NF service producer 1204 exchange signalling for the NWDAF 1202 to collect information about the NF service producer 1204. The collected information may relate to, for example, a current and/or projected load on the NF service producer, and a serving area covered by the NF service producer. The collected information may relate to information on a set of NF service producers to which the NF service producer 1204 is associated with (and to which it may share processing loads).

12002 may be performed by the NWDAF 1202 subscribing to events of the NRF and/or of the candidate NF service producers (e.g. NF service producer 1204) in order to collect data about at least one of the load, the set, and the serving area of the candidate NF service producers.

When the NWDAF 1202 does not comprise sufficient information about the NF proxy 1205 for responding to the signalling of 12001 (e.g. when the proxy is signalled and/or identified in 12001), the NWDAF performs 12003.

At 12003, the NWDAF 1202, NRF 1203, NF service producer 1204, and/or Proxy 1205 exchange signalling for the NWDAF 1202 to collect information about the Proxy 1205. The collected information may relate to, for example, a current and/or projected load on the Proxy 1205, and a serving area covered by the proxy 1205. The collected information may relate to information on a set of NF service producers to which the Proxy 1205 is associated with (and to which it may share processing loads).

12003 may be performed by the NWDAF 1202 subscribing to events of the NRF and/or of the Proxy 1205 in order to collect data about at least one of the load, the set, the serving area, and the supported NF types and sets (that can be mediated by this proxy) of the candidate proxies.

At 12004, the NWDAF 1202, NRF 1203, NF service producer 1204, Proxy 1205, and/or OAM 1206 exchange signalling for the NWDAF 1202 to collect information about the network topology. This is performed in order that the NWDAF may evaluate respective proximities of the candidate NFs/proxies to the NF service consumer 1201.

At 12005, the NWDAF 1202 follows up to the signalling of 12001 by signalling a notification to the NF service consumer. Using current 3GPP terminology, this notification may be, for example, an Nnwdaf_AnalyticsSubscription_Notification. This response may comprise an indication of a preferred target to which the NF service consumer may signal a subscription request for the service indicated in 12001. The preferred target may be an NF instance identifier (i.e. an identifier that uniquely identifies a single NF instance) or a plurality of NF instance identifiers arranged in an ordered list. The list may be arranged to indicate an order of preference for the NF service consumer 1201 to request a service. This response may comprise a subscription identifier.

Although the above mechanism of Figure 12 is described with reference to the NWDAF receiving a subscription request from an NF service consumer, it is understood that the OAM may subscribe at MDAS/NWDAF on behalf of at least one NF service consumer, and subsequently receive the notification of the preferred scheme at the target NF. On receipt of the preferred scheme, the OAM may configure the preferred scheme at the NF service consumer using OAM interfaces.

The above-described mechanisms have the advantage that the subscription scheme selection is more dynamic and considers various aspects of the network context, thus increasing the chances to enhance system performance and avoid NF overloading. Further, the schemes in which the NF service producer selects the subscription mechanism have the advantage that the subscription scheme selection is determined by the entity which is in danger of being overloaded and has more access to information about the performance increase potential.

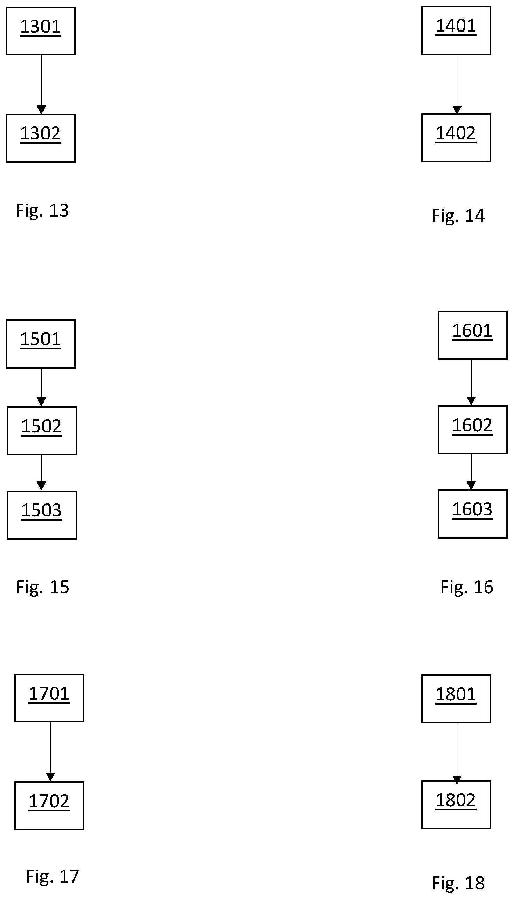

Figures 13 to 18 are flow charts illustrating potential operations that may be performed by apparatus described herein. It is understood that these flow charts highlight selected features of the above examples, and that they are combinable therewith. Further, the described apparatus be configured to work together and interact with each other.

Figure 13 is a flow chart illustrating potentiation operations that may be performed by an apparatus for a network function service producer.

At 1301, the apparatus determines whether a direct or an indirect subscription mechanism is optimal for the network function service producer.

At 1302, the apparatus signals an indication of the determined optimal subscription mechanism to a network function.

The network function may be a network repository function.

The network function may be a network function service consumer. In this case, the apparatus may receive, from the network function, a subscription request for subscribing to receive information about at least one event at the network function service producer, wherein the receiving is performed prior to said signalling an indication of the determined optimal subscription mechanism. The determined optimal subscription mechanism may be an indirect subscription mechanism, and the signalling the indication of the determined optimal subscription mechanism may comprises signalling a rejection of the subscription request. The rejection may comprise an explicit indication that an indirect subscription mechanism is an optimal subscription mechanism for the network function service producer when the subscription request received at the network function service produce is received via a direct subscription request.

In all of these cases, the apparatus of Figure 12 may exchange signalling with a network analytics function at a first time to determine whether the direct or indirect subscription mechanism is optimal for the network function service producer, exchanging signalling with the network analytics function at a second time to determine whether a direct or an indirect subscription mechanism is optimal for the network function service producer, wherein the second time is later than the first time, and, when the determination at the second time results in a different optimal subscription mechanism to the optimal subscription mechanism determined at the first time, signalling the different optimal subscription mechanism to the network function.

It is understood that although this application only explicitly describes an update procedure being performed at a "second time", that this update procedure may be performed several times throughout the subscription lifetime (i.e. at a third time, a fourth time, etc.). This update may be triggered by the network function service producer and/or the network analytics function following a determination that new network conditions apply relative to the last time the optimal subscription mechanism was signalled. Further, the different optimal subscription mechanism may be signalled to the network function service consumer indirectly via the network repository function.

Figure 14 is a flow chart illustrating potential operations that may be performed by an apparatus for a network function service consumer.

At 1401, the apparatus may receive, from a network function, an indication of whether a direct or an indirect subscription mechanism is optimal for requesting a subscription to events at a network function service producer.

At 1402, the apparatus may signal a subscription request in accordance with the received indication to use the signalled optimal subscription mechanism.

The network function may be a network analytics function. In this case, the apparatus may signal the network function for determining the optimal subscription mechanism, wherein the signalling the network function comprises signalling an identification of a service to be subscribed to and/or an identification of the network function service producer. The signalling the network function may comprise signalling a preference of the network function service consumer for using a direct and/or an indirect subscription.

The network function may be a network repository function.

The network function may be a network function service producer. This network function service producer may be the apparatus of Figure 13. In this case, the apparatus may signal the network function a subscription request before receiving, from the network function, the indication of whether a direct or an indirect subscription mechanism is optimal for requesting a subscription to events at a network function service producer.

The indication may indicate that an indirect subscription mechanism is preferred. In this case, the signalling a subscription request in accordance with the received indication may comprise signalling a subscription request for the network function service producer to a proxy network function.

The indication may indicate that a direct subscription mechanism is preferred. In this case, the signalling a subscription request in accordance with the received indication may comprise signalling a subscription request for the network function service producer to the network function service producer.

Figure 15 illustrates potential operations that may be performed by an apparatus for a network analytics function. This network analytics function may be the network analytics function featured in Figure 14 and/or Figure 13.

At 1501, the apparatus receives, from a network function, a request to determine whether a direct or an indirect subscription mechanism is optimal for requesting a subscription to events at a network function service producer.

At 1502, the apparatus exchanges signalling with the network function service producer to determine whether a direct or an indirect subscription mechanism is optimal for requesting a subscription to events at the network function service producer.

At 1503, the apparatus signals an indication of the determined optimal subscription mechanism to a network function.

The network function may be the network function service producer.

The network function may be a network function service consumer. In this case, the apparatus may receive, from the network function, an identification of a service to be subscribed to and/or an identification of the network function service producer.

The receiving may comprise receiving, from the network function, a preference of the network function service consumer for using a direct and/or an indirect subscription.

The signalling an indication of the determined optimal subscription mechanism to a network function comprises may comprise signalling an indication of at least one network function to which a subscription request for the network function service producer is to be addressed.

The exchanging signalling may comprise receiving, from the network function service producer, an indication of a status information of a parameter of the network function service producer, wherein the apparatus may use the indication of a status information of a parameter to determine whether the direct or indirect mechanism is preferred. The status example may be, for example, a current and/or projected load on the network function service producer.

Figure 16 is a flowchart illustrating potential operations that may be performed by an apparatus for a network repository function. This may be the network repository function discussed above in relation to Figures 13 to 15.

At 1601, the apparatus receives, from a network function service producer, an indication of whether a direct or an indirect subscription mechanism is optimal for requesting a subscription to events at the network function service producer.

At 1602, the apparatus stores the received indication.

At 1603, the apparatus provides the received indication to a network function service consumer. This may be performed via a pull procedure (e.g. discovery request and response). This may be performed via a push procedure (e.g. notification via a subscription to the network repository function). This latter option is especially useful when the network function service producer changes its optimal mechanism during use/while providing a service to a network function service consumer, as the network function service consumer may be informed of the change while being provided the service.

The apparatus may receive, from a network function service producer, a modified indication of whether a direct or an indirect subscription mechanism is optimal for requesting a subscription to events at the network function service producer, wherein the modified indication indicates the opposite subscription mechanism type to the type indicated by the received subscription mechanism. The apparatus may replace the received indication with the modified indication. The apparatus may provide the modified indication to a network function service consumer in response to receipt of a request for information about the network function service producer from the network function service consumer.

Figure 17 again considers operations that may be performed by an apparatus for a network function service consumer. This network function service consumer may be the network function service consumer of Figure 14.

At 1701, the apparatus signals, to a network function, an indication that the apparatus is capable of requesting a subscription from a service producer using both a direct signalling mechanism and an indirect signalling mechanism.

At 1702, the apparatus receives, from the network function, an indication of whether the apparatus should use the direct mechanism or the indirect mechanism for subscribing to the service producer.

Figure 18 again considers operations that may be performed by an apparatus for a network function. This network function may be the network function service producer of Figure 13, the network repository of Figure 16, or the network data analytics function of Figure 15.

At 1801, the apparatus receives from a network function service consumer, an indication that the apparatus is capable of requesting a subscription from a service producer using both a direct signalling mechanism and an indirect signalling mechanism. The network functions service consumer may be the network function service consumer of Figure 17.

At 1802, the apparatus signals, to the network function service consumer, an indication of whether the apparatus should use the direct mechanism or the indirect mechanism for subscribing to the service producer.

When the network function is the network function service producer, said indication that the apparatus is capable of requesting a subscription from a service producer using both a direct signalling mechanism and an indirect signalling mechanism may comprise an explicit indication that the apparatus is capable of requesting a subscription from a service producer using both a direct signalling mechanism and an indirect signalling mechanism. This explicit indication may be comprised within a subscription request sent to the network function service producer.

When the network function is a network analytics function, said indication that the apparatus is capable of requesting a subscription from a service producer using both a direct signalling mechanism and an indirect signalling mechanism may comprise an implicit indication that the apparatus is capable of requesting a subscription from a service producer using both a direct signalling mechanism and an indirect signalling mechanism. This implicit indication may be comprised within a request for discovering the network function service producer.

When the network function is a network repository function, the indication that the apparatus is capable of requesting a subscription from a service producer using both a direct signalling mechanism and an indirect signalling mechanism may comprise an implicit indication that the apparatus is capable of requesting a subscription from a service producer using both a direct signalling mechanism and an indirect signalling mechanism. This implicit indication may be comprised in a request for information about the service producer.

In all of these cases, the network function service consumer may signal a subscription request to the network function service producer using the indicated mechanism.

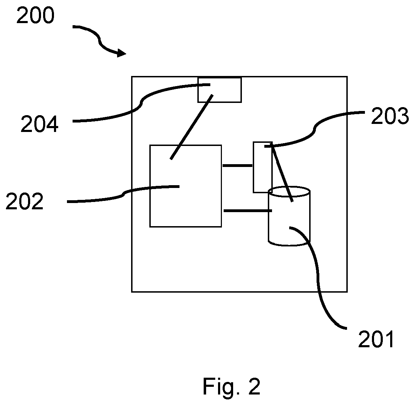

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR etc. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example the control apparatus 200 or processor 201 can be configured to execute an appropriate software code to provide the control functions.

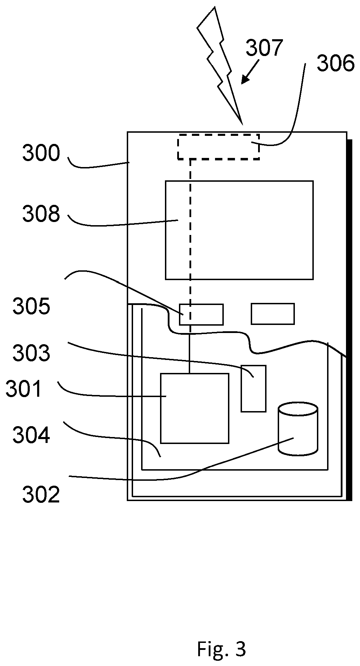

A possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. In the present teachings the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the wireless device.

A wireless device is typically provided with at least one data processing entity 301, at least one memory 302 and other possible components 303 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 704. The user may control the operation of the wireless device by means of a suitable user interface such as key pad 305, voice commands, touch sensitive screen or pad, combinations thereof or the like. A display 308, a speaker and a microphone can be also provided. Furthermore, a wireless communication device may comprise appropriate connectors (either wired or wireless) to other devices and/or for connecting external accessories, for example hands-free equipment, thereto.

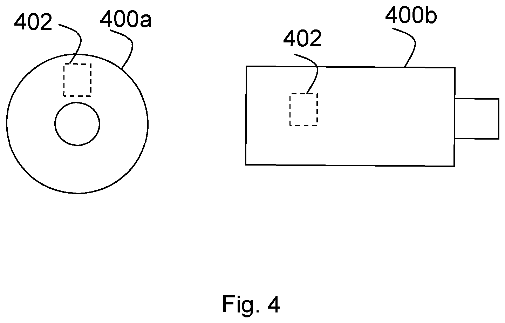

Figure 4 shows a schematic representation of non-volatile memory media 400a (e.g. computer disc (CD) or digital versatile disc (DVD)) and 400b (e.g. universal serial bus (USB) memory stick) storing instructions and/or parameters 402 which when executed by a processor allow the processor to perform one or more of the steps of the methods of Figure 13, and/or Figure 14, and/or Figure 15, and/or Figure 16, and/or Figure 17, and/or Figure 18.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figure 13, and/or Figure 14, and/or Figure 15, and/or Figure 16, and/or Figure 17, and/or Figure 18, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (AStudy ItemC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

In the above, different examples are described using, as an example of an access architecture to which the presently described techniques may be applied, a radio access architecture based on long term evolution advanced (LTE Advanced, LTE-A) or new radio (NR, 5G), without restricting the examples to such an architecture, however. The examples may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

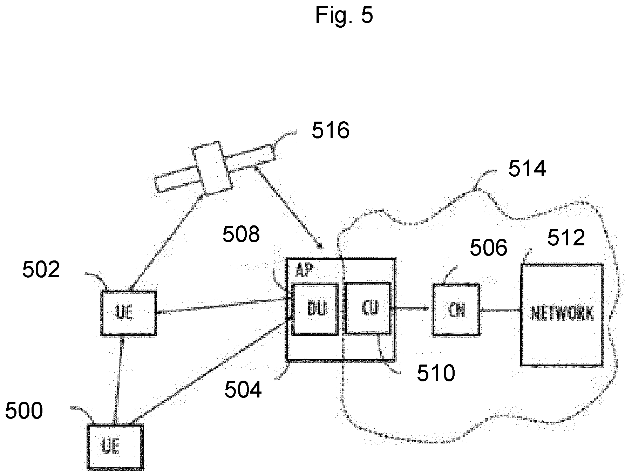

Figure 5 depicts examples of simplified system architectures only showing some elements and functional entities, all being logical units, whose implementation may differ from what is shown. The connections shown in Figure 5 are logical connections; the actual physical connections may be different. It is apparent to a person skilled in the art that the system typically comprises also other functions and structures than those shown in Figure 5.

The examples are not, however, restricted to the system given as an example but a person skilled in the art may apply the solution to other communication systems provided with necessary properties.

The example of Figure 5 shows a part of an exemplifying radio access network. For example, the radio access network may support sidelink communications described below in more detail.

Figure 5 shows devices 500 and 502. The devices 500 and 502 are configured to be in a wireless connection on one or more communication channels with a node 504. The node 504 is further connected to a core network 506. In one example, the node 504 may be an access node such as (e/g)NodeB serving devices in a cell. In one example, the node 504 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 506 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one or more external packet data networks, and to a mobile management entity (MME) or access mobility management function (AMF), for controlling access and mobility of the devices.

Examples of a device are a subscriber unit, a user device, a user equipment (UE), a user terminal, a terminal device, a mobile station, a mobile device, etc

The device typically refers to a mobile or static device ( e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or, in some examples, a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 5) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control). 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 512, such as a public switched telephone network, or a VoIP network, or the Internet, or a private network, or utilize services provided by them. The communication network may also be able to support the usage of cloud services, for example at least part of core network operations may be carried out as a cloud service (this is depicted in Figure 5 by "cloud" 514). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 508) and non-real time functions being carried out in a centralized manner (in a centralized unit, CU 510).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, Mobile Broadband, (MBB) or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 5 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 5). A HNB Gateway (HNB-GW), which is typically installed within an operator's network may aggregate traffic from a large number of HNBs back to a core network.

## Claims

1. An apparatus for a network function service producer, the apparatus comprising means configured for:
determining whether a direct or an indirect subscription mechanism is preferred for the network function service producer; and
signalling an indication of the determined preferred subscription mechanism to a network function;
wherein the network function is a network function service consumer, and the apparatus is **characterized by** comprising:
means configured for receiving from the network function, a subscription request for subscribing to receive information about at least one event at the network function service producer, wherein the receiving is performed prior to said signalling an indication of the determined preferred subscription mechanism;
wherein the determined preferred subscription mechanism is the indirect subscription mechanism, and the means for signalling the indication of the determined preferred subscription mechanism further comprises signalling a rejection of the subscription request;
wherein the rejection comprises an explicit indication that the indirect subscription mechanism is the preferred subscription mechanism for the network function service producer when the subscription request received at the network function service producer is received via a direct subscription request.

2. An apparatus as claimed in claim 1, comprising further means configured for:
exchanging signalling with a network analytics function at a first time to determine whether the direct or the indirect subscription mechanism is preferred for the network function service producer;
exchanging signalling with the network analytics function at a second time to determine whether the direct or the indirect subscription mechanism is preferred for the network function service producer, wherein the second time is later than the first time; and
when the determination at the second time results in a different preferred subscription mechanism to the preferred subscription mechanism determined at the first time, signalling the different preferred subscription mechanism to the network function.

3. An apparatus for a network function service consumer, the apparatus comprising means configured for:
receiving, from a network function, an indication of whether a direct or an indirect subscription mechanism is preferred for requesting a subscription to events at a network function service producer; and
signalling a subscription request in accordance with the received indication to use the signalled preferred subscription mechanism;
wherein the network function is the network function service producer, and the apparatus is **characterized by** comprising means configured for:
signalling the network function a subscription request before receiving, from the network function, the indication of whether the direct or the indirect subscription mechanism is preferred for requesting the subscription to the events at the network function service producer;
wherein the signaled preferred subscription mechanism is the indirect subscription mechanism, and the received indication comprises a rejection of the subscription request;
wherein the rejection comprises an explicit indication that the indirect subscription mechanism is the preferred subscription mechanism for the network function service producer when the subscription request is transmitted via a direct subscription request.

4. An apparatus as claimed in claim 3, wherein the network function is a network analytics function, and the apparatus comprises means further configured signalling the network function for determining the preferred subscription mechanism, wherein the means signalling the network function comprises means for signalling an identification of a service to be subscribed to and/or an identification of the network function service producer.

5. An apparatus as claimed in claim 4, wherein the means for signalling the network function comprises further means configured for signalling a preference of the network function service consumer for using the direct and/or the indirect subscription.

6. An apparatus for a network analytics function, the apparatus comprising means configured for:
receiving, from a network function, a request to determine whether a direct or an indirect subscription mechanism is preferred for requesting a subscription to events at a network function service producer;
exchanging signalling with the network function service producer to determine whether the direct or the indirect subscription mechanism is preferred for requesting the subscription to the events at the network function service producer; and
signalling an indication of the determined preferred subscription mechanism to a network function;
the apparatus is **characterized by** comprising the said means for exchanging the signalling comprising further means configured for receiving, from the network function service producer, an indication of a status information of a parameter of the network function service producer, wherein the apparatus comprises further means configured for using the indication of the current and/or projected load to determine whether the direct or the indirect mechanism is preferred.

7. An apparatus for a network repository function, the apparatus comprising means configured for:
receiving, from a network function service producer, an indication of whether a direct or an indirect subscription mechanism is preferred for requesting a subscription to events at the network function service producer;
storing the received indication; and
providing the received indication to a network function service consumer;
the apparatus is **characterized by** comprising the receiving means further configured for: receiving, from the network function service producer, a modified indication of whether the direct or the indirect subscription mechanism is preferred for requesting a subscription to events at the network function service producer, wherein the modified indication indicates the opposite subscription mechanism type to the type indicated by the received subscription mechanism;
replacing the received indication with the modified indication; and providing means further configured for providing the modified indication to a network function service consumer in response to receipt of a request for information about the network function service producer from the network function service consumer.

8. A method for a network function service producer, the method comprising:
determining whether a direct or an indirect subscription mechanism is preferred for the network function service producer; and
signalling an indication of the determined preferred subscription mechanism to a network function;
wherein the network function is a network function service consumer; the method being **characterized by**:
receiving from the network function, a subscription request for subscribing to receive information about at least one event at the network function service producer, wherein the receiving is performed prior to said signalling an indication of the determined preferred subscription mechanism;
wherein the determined preferred subscription mechanism is the indirect subscription mechanism, and the signalling the indication of the determined preferred subscription mechanism comprises signalling a rejection of the subscription request;
wherein the rejection comprises an explicit indication that the indirect subscription mechanism is the preferred subscription mechanism for the network function service producer when the subscription request received at the network function service producer is received via a direct subscription request.

9. A method for a network function service consumer, the method comprising:
receiving, from a network function, an indication of whether a direct or an indirect subscription mechanism is preferred for requesting a subscription to events at a network function service producer; and
signalling a subscription request in accordance with the received indication to use the signalled preferred subscription mechanism;
wherein the network function is the network function service producer;
the method being **characterized by**:
signalling the network function a subscription request before receiving, from the network function, the indication of whether the direct or the indirect subscription mechanism is preferred for requesting the subscription to the events at the network function service producer;
wherein the signaled preferred subscription mechanism is the indirect subscription mechanism, and the received indication comprises a rejection of the subscription request;
wherein the rejection comprises an explicit indication that the indirect subscription mechanism is the preferred subscription mechanism for the network function service producer when the subscription request is transmitted via a direct subscription request.

10. A method for a network analytics function, the method comprising:
receiving, from a network function, a request to determine whether a direct or an indirect subscription mechanism is preferred for requesting a subscription to events at a network function service producer;
exchanging signalling with the network function service producer to determine whether the direct or the indirect subscription mechanism is preferred for requesting the subscription to the events at the network function service producer; and
signalling an indication of the determined preferred subscription mechanism to a network function;
the method being **characterized in that**:
the exchanging the signalling comprises receiving, from the network function service producer, an indication of a status information of a parameter of the network function service producer, wherein the method further comprises using the indication of the current and/or projected load to determine whether the direct or the indirect mechanism is preferred.

11. A method for a network repository function, the method comprising:
receiving, from a network function service producer, an indication of whether a direct or an indirect subscription mechanism is preferred for requesting a subscription to events at the network function service producer;
storing the received indication; and
providing the received indication to a network function service consumer;
the method being **characterized by**:
receiving, from the network function service producer, a modified indication of whether the direct or the indirect subscription mechanism is preferred for requesting a subscription to events at the network function service producer, wherein the modified indication indicates the opposite subscription mechanism type to the type indicated by the received subscription mechanism;
replacing the received indication with the modified indication; and
providing the modified indication to a network function service consumer in response to receipt of a request for information about the network function service producer from the network function service consumer.

## Patentansprüche

1. Vorrichtung für einen Netzwerkfunktions-Diensterzeuger, wobei die Vorrichtung Mittel umfasst, die konfiguriert sind zum:
Bestimmen, ob ein direkter oder ein indirekter Abonnement-Mechanismus für den Netzwerkfunktions-Diensterzeuger bevorzugt ist; und
Signalisieren einer Angabe des bestimmten bevorzugten Abonnement-Mechanismus an eine Netzwerkfunktion;
wobei die Netzwerkfunktion ein Netzwerkfunktions-Dienstverbraucher ist, und die Vorrichtung **dadurch gekennzeichnet ist, dass** sie umfasst:
Mittel, die konfiguriert sind zum Empfangen von der Netzwerkfunktion einer Abonnement-Anforderung zum Abonnieren, um Informationen über mindestens ein Ereignis am Netzwerkfunktions-Diensterzeuger zu empfangen, wobei das Empfangen vor der besagten Signalisierung einer Angabe des bestimmten bevorzugten Abonnement-Mechanismus durchgeführt wird;
wobei der bestimmte bevorzugte Abonnement-Mechanismus der indirekte Abonnement-Mechanismus ist, und die Mittel zum Signalisieren der Angabe des bestimmten bevorzugten Abonnement-Mechanismus ferner das Signalisieren einer Ablehnung der Abonnement-Anforderung umfassen;
wobei die Ablehnung eine explizite Angabe umfasst, dass der indirekte Abonnement-Mechanismus der bevorzugte Abonnement-Mechanismus für den Netzwerkfunktions-Diensterzeuger ist, wenn die am Netzwerkfunktions-Diensterzeuger empfangene Abonnement-Anforderung über eine direkte Abonnement-Anforderung empfangen wird.

2. Vorrichtung nach Anspruch 1, ferner umfassend Mittel, die konfiguriert sind zum:
Austauschen einer Signalisierung mit einer Netzwerkanalysefunktion zu einem ersten Zeitpunkt, um zu bestimmen, ob der direkte oder der indirekte Abonnement-Mechanismus für den Netzwerkfunktions-Diensterzeuger bevorzugt ist;
Austauschen einer Signalisierung mit der Netzwerkanalysefunktion zu einem zweiten Zeitpunkt, um zu bestimmen, ob der direkte oder der indirekte Abonnement-Mechanismus für den Netzwerkfunktions-Diensterzeuger bevorzugt ist, wobei der zweite Zeitpunkt nach dem ersten Zeitpunkt liegt; und
wenn die Bestimmung zum zweiten Zeitpunkt zu einem anderen bevorzugten Abonnement-Mechanismus als dem zum ersten Zeitpunkt bestimmten bevorzugten Abonnement-Mechanismus führt, Signalisieren des anderen bevorzugten Abonnement-Mechanismus an die Netzwerkfunktion.

3. Vorrichtung für einen Netzwerkfunktions-Dienstverbraucher, wobei die Vorrichtung Mittel umfasst, die konfiguriert sind zum:
Empfangen, von einer Netzwerkfunktion, einer Angabe, ob ein direkter oder ein indirekter Abonnement-Mechanismus für das Anfordern eines Abonnements zu Ereignissen an einem Netzwerkfunktions-Diensterzeuger bevorzugt ist; und
Signalisieren einer Abonnement-Anforderung gemäß der empfangenen Angabe, um den signalisierten bevorzugten Abonnement-Mechanismus zu verwenden;
wobei die Netzwerkfunktion der Netzwerkfunktions-Diensterzeuger ist, und die Vorrichtung **dadurch gekennzeichnet ist, dass** sie Mittel umfasst, die konfiguriert sind zum:
Signalisieren an die Netzwerkfunktion einer Abonnement-Anforderung vor dem Empfangen, von der Netzwerkfunktion, der Angabe, ob der direkte oder der indirekte Abonnement-Mechanismus für das Anfordern des Abonnements zu den Ereignissen am Netzwerkfunktions-Diensterzeuger bevorzugt ist;
wobei der signalisierte bevorzugte Abonnement-Mechanismus der indirekte Abonnement-Mechanismus ist, und die empfangene Angabe eine Ablehnung der Abonnement-Anforderung umfasst;
wobei die Ablehnung eine explizite Angabe umfasst, dass der indirekte Abonnement-Mechanismus der bevorzugte Abonnement-Mechanismus für den Netzwerkfunktions-Diensterzeuger ist, wenn die Abonnement-Anforderung über eine direkte Abonnement-Anforderung übermittelt wird.

4. Vorrichtung nach Anspruch 3, wobei die Netzwerkfunktion eine Netzwerkanalysefunktion ist, und die Vorrichtung ferner Mittel umfasst, die konfiguriert sind zum:
Signalisieren der Netzwerkfunktion zur Bestimmung des bevorzugten Abonnement-Mechanismus, wobei die Mittel zum Signalisieren der Netzwerkfunktion Mittel zum Signalisieren einer Kennung eines Dienstes, der abonniert werden soll, und/oder einer Kennung des Netzwerkfunktions-Diensterzeugers umfassen.

5. Vorrichtung nach Anspruch 4, wobei die Mittel zum Signalisieren der Netzwerkfunktion ferner Mittel umfassen, die konfiguriert sind zum Signalisieren einer Präferenz des Netzwerkfunktions-Dienstverbrauchers für die Nutzung des direkten und/oder indirekten Abonnements.

6. Vorrichtung für eine Netzwerkanalysefunktion, wobei die Vorrichtung Mittel umfasst, die konfiguriert sind zum:
Empfangen, von einer Netzwerkfunktion, einer Anforderung zur Bestimmung, ob ein direkter oder ein indirekter Abonnement-Mechanismus für das Anfordern eines Abonnements zu Ereignissen an einem Netzwerkfunktions-Diensterzeuger bevorzugt ist;
Austauschen einer Signalisierung mit dem Netzwerkfunktions-Diensterzeuger, um zu bestimmen, ob der direkte oder der indirekte Abonnement-Mechanismus für das Anfordern des Abonnements zu den Ereignissen am Netzwerkfunktions-Diensterzeuger bevorzugt ist; und
Signalisieren einer Angabe des bestimmten bevorzugten Abonnement-Mechanismus an eine Netzwerkfunktion;
wobei die Vorrichtung **dadurch gekennzeichnet ist, dass** die besagten Mittel zum Austauschen der Signalisierung ferner Mittel umfassen, die konfiguriert sind zum:
Empfangen, vom Netzwerkfunktions-Diensterzeuger, einer Angabe einer Statusinformation eines Parameters des Netzwerkfunktions-Diensterzeugers,
wobei die Vorrichtung ferner Mittel umfasst, die konfiguriert sind zum Verwenden der Angabe der aktuellen und/oder prognostizierten Last, um zu bestimmen, ob der direkte oder der indirekte Mechanismus bevorzugt ist.

7. Vorrichtung für eine Netzwerk-Repository-Funktion, wobei die Vorrichtung Mittel umfasst, die konfiguriert sind zum:
Empfangen, von einem Netzwerkfunktions-Diensterzeuger, einer Angabe, ob ein direkter oder ein indirekter Abonnement-Mechanismus für das Anfordern eines Abonnements zu Ereignissen am Netzwerkfunktions-Diensterzeuger bevorzugt ist;
Speichern der empfangenen Angabe; und
Bereitstellen der empfangenen Angabe an einen Netzwerkfunktions-Dienstverbraucher;
wobei die Vorrichtung **dadurch gekennzeichnet ist, dass** die Empfangsmittel ferner Mittel umfassen, die konfiguriert sind zum:
Empfangen, vom Netzwerkfunktions-Diensterzeuger, einer geänderten Angabe, ob der direkte oder der indirekte Abonnement-Mechanismus für das Anfordern eines Abonnements zu Ereignissen am Netzwerkfunktions-Diensterzeuger bevorzugt ist, wobei die geänderte Angabe den entgegengesetzten Abonnement-Mechanismus-Typ zu dem durch den empfangenen Abonnement-Mechanismus angegebenen Typ angibt;
Ersetzen der empfangenen Angabe durch die geänderte Angabe; und
wobei Bereitstellungsmittel ferner konfiguriert sind zum Bereitstellen der geänderten Angabe an einen Netzwerkfunktions-Dienstverbraucher als Antwort auf den Empfang einer Anforderung von Informationen über den Netzwerkfunktions-Diensterzeuger vom Netzwerkfunktions-Dienstverbraucher.

8. Verfahren für einen Netzwerkfunktions-Diensterzeuger, wobei das Verfahren umfasst:
Bestimmen, ob ein direkter oder ein indirekter Abonnement-Mechanismus für den Netzwerkfunktions-Diensterzeuger bevorzugt ist; und
Signalisieren einer Angabe des bestimmten bevorzugten Abonnement-Mechanismus an eine Netzwerkfunktion;
wobei die Netzwerkfunktion ein Netzwerkfunktions-Dienstverbraucher ist;
wobei das Verfahren **dadurch gekennzeichnet** ist:
Empfangen von der Netzwerkfunktion einer Abonnement-Anforderung zum Abonnieren, um Informationen über mindestens ein Ereignis am Netzwerkfunktions-Diensterzeuger zu empfangen, wobei das Empfangen vor der besagten Signalisierung einer Angabe des bestimmten bevorzugten Abonnement-Mechanismus durchgeführt wird;
wobei der bestimmte bevorzugte Abonnement-Mechanismus der indirekte Abonnement-Mechanismus ist, und die Signalisierung der Angabe des bestimmten bevorzugten Abonnement-Mechanismus das Signalisieren einer Ablehnung der Abonnement-Anforderung umfasst;
wobei die Ablehnung eine explizite Angabe umfasst, dass der indirekte Abonnement-Mechanismus der bevorzugte Abonnement-Mechanismus für den Netzwerkfunktions-Diensterzeuger ist, wenn die am Netzwerkfunktions-Diensterzeuger empfangene Abonnement-Anforderung über eine direkte Abonnement-Anforderung empfangen wird.

9. Verfahren für einen Netzwerkfunktions-Dienstverbraucher, wobei das Verfahren umfasst:
Empfangen, von einer Netzwerkfunktion, einer Angabe, ob ein direkter oder ein indirekter Abonnement-Mechanismus für das Anfordern eines Abonnements zu Ereignissen an einem Netzwerkfunktions-Diensterzeuger bevorzugt ist; und
Signalisieren einer Abonnement-Anforderung gemäß der empfangenen Angabe, um den signalisierten bevorzugten Abonnement-Mechanismus zu verwenden;
wobei die Netzwerkfunktion der Netzwerkfunktions-Diensterzeuger ist;
wobei das Verfahren **dadurch gekennzeichnet** ist:
Signalisieren an die Netzwerkfunktion einer Abonnement-Anforderung vor dem Empfangen, von der Netzwerkfunktion, der Angabe, ob der direkte oder der indirekte Abonnement-Mechanismus für das Anfordern des Abonnements zu den Ereignissen am Netzwerkfunktions-Diensterzeuger bevorzugt ist;
wobei der signalisierte bevorzugte Abonnement-Mechanismus der indirekte Abonnement-Mechanismus ist, und die empfangene Angabe eine Ablehnung der Abonnement-Anforderung umfasst;
wobei die Ablehnung eine explizite Angabe umfasst, dass der indirekte Abonnement-Mechanismus der bevorzugte Abonnement-Mechanismus für den Netzwerkfunktions-Diensterzeuger ist, wenn die Abonnement-Anforderung über eine direkte Abonnement-Anforderung übermittelt wird.

10. Verfahren für eine Netzwerkanalysefunktion, wobei das Verfahren umfasst:
Empfangen, von einer Netzwerkfunktion, einer Anforderung zur Bestimmung, ob ein direkter oder ein indirekter Abonnement-Mechanismus für das Anfordern eines Abonnements zu Ereignissen an einem Netzwerkfunktions-Diensterzeuger bevorzugt ist;
Austauschen einer Signalisierung mit dem Netzwerkfunktions-Diensterzeuger, um zu bestimmen, ob der direkte oder der indirekte Abonnement-Mechanismus für das Anfordern des Abonnements zu den Ereignissen am Netzwerkfunktions-Diensterzeuger bevorzugt ist; und
Signalisieren einer Angabe des bestimmten bevorzugten Abonnement-Mechanismus an eine Netzwerkfunktion;
wobei das Verfahren **dadurch gekennzeichnet ist, dass**:
das Austauschen der Signalisierung das Empfangen, vom Netzwerkfunktions-Diensterzeuger, einer Angabe einer Statusinformation eines Parameters des Netzwerkfunktions-Diensterzeugers umfasst, wobei das Verfahren ferner das Verwenden der Angabe der aktuellen und/oder prognostizierten Last umfasst, um zu bestimmen, ob der direkte oder der indirekte Mechanismus bevorzugt ist.

11. Verfahren für eine Netzwerk-Repository-Funktion, wobei das Verfahren umfasst:
Empfangen, von einem Netzwerkfunktions-Diensterzeuger, einer Angabe, ob ein direkter oder ein indirekter Abonnement-Mechanismus für das Anfordern eines Abonnements zu Ereignissen am Netzwerkfunktions-Diensterzeuger bevorzugt ist;
Speichern der empfangenen Angabe; und
Bereitstellen der empfangenen Angabe an einen Netzwerkfunktions-Dienstverbraucher;
wobei das Verfahren **dadurch gekennzeichnet** ist:
Empfangen, vom Netzwerkfunktions-Diensterzeuger, einer geänderten Angabe, ob der direkte oder der indirekte Abonnement-Mechanismus für das Anfordern eines Abonnements zu Ereignissen am Netzwerkfunktions-Diensterzeuger bevorzugt ist, wobei die geänderte Angabe den entgegengesetzten Abonnement-Mechanismus-Typ zu dem durch den empfangenen Abonnement-Mechanismus angegebenen Typ angibt;
Ersetzen der empfangenen Angabe durch die geänderte Angabe; und
Bereitstellen der geänderten Angabe an einen Netzwerkfunktions-Dienstverbraucher als Antwort auf den Empfang einer Anforderung von Informationen über den Netzwerkfunktions-Diensterzeuger vom Netzwerkfunktions-Dienstverbraucher.

## Revendications

1. Appareil pour un producteur de service de fonction de réseau, l'appareil comprenant des moyens configurés pour :
déterminer si un mécanisme d'abonnement direct ou indirect est préféré pour le producteur de service de fonction de réseau ; et
signaler une indication du mécanisme d'abonnement préféré déterminé à une fonction de réseau ;
dans lequel la fonction de réseau est un consommateur de service de fonction de réseau, et l'appareil est **caractérisé en ce qu'**il comprend :
des moyens configurés pour recevoir de la fonction de réseau, une demande d'abonnement pour s'abonner afin de recevoir des informations concernant au moins un événement au niveau du producteur de service de fonction de réseau, dans lequel la réception est effectuée avant ladite signalisation d'une indication du mécanisme d'abonnement préféré déterminé ;
dans lequel le mécanisme d'abonnement préféré déterminé est le mécanisme d'abonnement indirect, et les moyens pour signaler l'indication du mécanisme d'abonnement préféré déterminé comprennent en outre la signalisation d'un rejet de la demande d'abonnement ;
dans lequel le rejet comprend une indication explicite que le mécanisme d'abonnement indirect est le mécanisme d'abonnement préféré pour le producteur de service de fonction de réseau lorsque la demande d'abonnement reçue au niveau du producteur de service de fonction de réseau est reçue via une demande d'abonnement direct.

2. Appareil selon la revendication 1, comprenant en outre des moyens configurés pour :
échanger une signalisation avec une fonction d'analyse de réseau à un premier instant pour déterminer si le mécanisme d'abonnement direct ou indirect est préféré pour le producteur de service de fonction de réseau ;
échanger une signalisation avec la fonction d'analyse de réseau à un second instant pour déterminer si le mécanisme d'abonnement direct ou indirect est préféré pour le producteur de service de fonction de réseau, dans lequel le second instant est postérieur au premier instant ; et
lorsque la détermination au second instant aboutit à un mécanisme d'abonnement préféré différent du mécanisme d'abonnement préféré déterminé au premier instant, signaler le mécanisme d'abonnement préféré différent à la fonction de réseau.

3. Appareil pour un consommateur de service de fonction de réseau, l'appareil comprenant des moyens configurés pour :
recevoir, d'une fonction de réseau, une indication indiquant si un mécanisme d'abonnement direct ou indirect est préféré pour demander un abonnement à des événements au niveau d'un producteur de service de fonction de réseau ; et
signaler une demande d'abonnement conformément à l'indication reçue pour utiliser le mécanisme d'abonnement préféré signalé ;
dans lequel la fonction de réseau est le producteur de service de fonction de réseau, et l'appareil est **caractérisé en ce qu'**il comprend des moyens configurés pour :
signaler à la fonction de réseau une demande d'abonnement avant de recevoir, de la fonction de réseau, l'indication indiquant si le mécanisme d'abonnement direct ou indirect est préféré pour demander l'abonnement aux événements au niveau du producteur de service de fonction de réseau ;
dans lequel le mécanisme d'abonnement préféré signalé est le mécanisme d'abonnement indirect, et l'indication reçue comprend un rejet de la demande d'abonnement ;
dans lequel le rejet comprend une indication explicite que le mécanisme d'abonnement indirect est le mécanisme d'abonnement préféré pour le producteur de service de fonction de réseau lorsque la demande d'abonnement est transmise via une demande d'abonnement direct.

4. Appareil selon la revendication 3, dans lequel la fonction de réseau est une fonction d'analyse de réseau, et l'appareil comprend en outre des moyens configurés pour :
signaler la fonction de réseau pour la détermination du mécanisme d'abonnement préféré, dans lequel les moyens pour signaler la fonction de réseau comprennent des moyens pour signaler une identification d'un service auquel s'abonner et/ou une identification du producteur de service de fonction de réseau.

5. Appareil selon la revendication 4, dans lequel les moyens pour signaler la fonction de réseau comprennent en outre des moyens configurés pour signaler une préférence du consommateur de service de fonction de réseau pour l'utilisation de l'abonnement direct et/ou indirect.

6. Appareil pour une fonction d'analyse de réseau, l'appareil comprenant des moyens configurés pour :
recevoir, d'une fonction de réseau, une demande pour déterminer si un mécanisme d'abonnement direct ou indirect est préféré pour demander un abonnement à des événements au niveau d'un producteur de service de fonction de réseau ;
échanger une signalisation avec le producteur de service de fonction de réseau pour déterminer si le mécanisme d'abonnement direct ou indirect est préféré pour demander l'abonnement aux événements au niveau du producteur de service de fonction de réseau ; et
signaler une indication du mécanisme d'abonnement préféré déterminé à une fonction de réseau ;
l'appareil étant **caractérisé en ce que** lesdits moyens pour échanger la signalisation comprennent en outre des moyens configurés pour :
recevoir, du producteur de service de fonction de réseau, une indication d'une information d'état d'un paramètre du producteur de service de fonction de réseau,
dans lequel l'appareil comprend en outre des moyens configurés pour utiliser l'indication de la charge actuelle et/ou projetée pour déterminer si le mécanisme direct ou indirect est préféré.

7. Appareil pour une fonction de référentiel de réseau, l'appareil comprenant des moyens configurés pour :
recevoir, d'un producteur de service de fonction de réseau, une indication indiquant si un mécanisme d'abonnement direct ou indirect est préféré pour demander un abonnement à des événements au niveau du producteur de service de fonction de réseau ;
stocker l'indication reçue ; et
fournir l'indication reçue à un consommateur de service de fonction de réseau ;
l'appareil étant **caractérisé en ce que** les moyens de réception comprennent en outre des moyens configurés pour :
recevoir, du producteur de service de fonction de réseau, une indication modifiée indiquant si le mécanisme d'abonnement direct ou indirect est préféré pour demander un abonnement à des événements au niveau du producteur de service de fonction de réseau, dans lequel l'indication modifiée indique le type de mécanisme d'abonnement opposé au type indiqué par le mécanisme d'abonnement reçu ;
remplacer l'indication reçue par l'indication modifiée ; et
des moyens de fourniture en outre configurés pour fournir l'indication modifiée à un consommateur de service de fonction de réseau en réponse à la réception d'une demande d'informations concernant le producteur de service de fonction de réseau de la part du consommateur de service de fonction de réseau.

8. Procédé pour un producteur de service de fonction de réseau, le procédé comprenant :
déterminer si un mécanisme d'abonnement direct ou indirect est préféré pour le producteur de service de fonction de réseau ; et
signaler une indication du mécanisme d'abonnement préféré déterminé à une fonction de réseau ;
dans lequel la fonction de réseau est un consommateur de service de fonction de réseau ;
le procédé étant **caractérisé par** :
la réception de la fonction de réseau, d'une demande d'abonnement pour s'abonner afin de recevoir des informations concernant au moins un événement au niveau du producteur de service de fonction de réseau, dans lequel la réception est effectuée avant ladite signalisation d'une indication du mécanisme d'abonnement préféré déterminé ;
dans lequel le mécanisme d'abonnement préféré déterminé est le mécanisme d'abonnement indirect, et la signalisation de l'indication du mécanisme d'abonnement préféré déterminé comprend la signalisation d'un rejet de la demande d'abonnement ;
dans lequel le rejet comprend une indication explicite que le mécanisme d'abonnement indirect est le mécanisme d'abonnement préféré pour le producteur de service de fonction de réseau lorsque la demande d'abonnement reçue au niveau du producteur de service de fonction de réseau est reçue via une demande d'abonnement direct.

9. Procédé pour un consommateur de service de fonction de réseau, le procédé comprenant :
recevoir, d'une fonction de réseau, une indication indiquant si un mécanisme d'abonnement direct ou indirect est préféré pour demander un abonnement à des événements au niveau d'un producteur de service de fonction de réseau ; et
signaler une demande d'abonnement conformément à l'indication reçue pour utiliser le mécanisme d'abonnement préféré signalé ;
dans lequel la fonction de réseau est le producteur de service de fonction de réseau ;
le procédé étant **caractérisé par** :
signaler à la fonction de réseau une demande d'abonnement avant de recevoir, de la fonction de réseau, l'indication indiquant si le mécanisme d'abonnement direct ou indirect est préféré pour demander l'abonnement aux événements au niveau du producteur de service de fonction de réseau ;
dans lequel le mécanisme d'abonnement préféré signalé est le mécanisme d'abonnement indirect, et l'indication reçue comprend un rejet de la demande d'abonnement ;
dans lequel le rejet comprend une indication explicite que le mécanisme d'abonnement indirect est le mécanisme d'abonnement préféré pour le producteur de service de fonction de réseau lorsque la demande d'abonnement est transmise via une demande d'abonnement direct.

10. Procédé pour une fonction d'analyse de réseau, le procédé comprenant :
recevoir, d'une fonction de réseau, une demande pour déterminer si un mécanisme d'abonnement direct ou indirect est préféré pour demander un abonnement à des événements au niveau d'un producteur de service de fonction de réseau ;
échanger une signalisation avec le producteur de service de fonction de réseau pour déterminer si le mécanisme d'abonnement direct ou indirect est préféré pour demander l'abonnement aux événements au niveau du producteur de service de fonction de réseau ; et
signaler une indication du mécanisme d'abonnement préféré déterminé à une fonction de réseau ;
le procédé étant **caractérisé en ce que** :
l'échange de signalisation comprend la réception, du producteur de service de fonction de réseau, d'une indication d'une information d'état d'un paramètre du producteur de service de fonction de réseau, dans lequel le procédé comprend en outre l'utilisation de l'indication de la charge actuelle et/ou projetée pour déterminer si le mécanisme direct ou indirect est préféré.

11. Procédé pour une fonction de référentiel de réseau, le procédé comprenant :
recevoir, d'un producteur de service de fonction de réseau, une indication indiquant si un mécanisme d'abonnement direct ou indirect est préféré pour demander un abonnement à des événements au niveau du producteur de service de fonction de réseau ;
stocker l'indication reçue ; et
fournir l'indication reçue à un consommateur de service de fonction de réseau ;
le procédé étant **caractérisé par** :
la réception, du producteur de service de fonction de réseau, d'une indication modifiée indiquant si le mécanisme d'abonnement direct ou indirect est préféré pour demander un abonnement à des événements au niveau du producteur de service de fonction de réseau, dans lequel l'indication modifiée indique le type de mécanisme d'abonnement opposé au type indiqué par le mécanisme d'abonnement reçu ;
remplacer l'indication reçue par l'indication modifiée ; et
fournir l'indication modifiée à un consommateur de service de fonction de réseau en réponse à la réception d'une demande d'informations concernant le producteur de service de fonction de réseau de la part du consommateur de service de fonction de réseau.
